(19) Europäisches Patentamt
European Patent Office
Office européen des brevets

(11) EP 1 414 896 B1

(12) **EUROPEAN PATENT SPECIFICATION**

(45) Date of publication and mention of the grant of the patent:
**12.01.2005 Bulletin 2005/02**

(21) Application number: **02756871.6**

(22) Date of filing: **01.08.2002**

(51) Int Cl.[7]: **C08K 5/00**, C08K 3/16, C09J 7/02, C09J 9/02

(86) International application number:
**PCT/US2002/024395**

(87) International publication number:
**WO 2003/011958 (13.02.2003 Gazette 2003/07)**

(54) **OPTICALLY CLEAR AND ANTISTATIC PRESSURE SENSITIVE ADHESIVES**

OPTISCH KLARE UND ANTISTATISCHE HAFTKLEBEMITTEL

ADHESIFS AUTOCOLLANTS ANTISTATIQUES OPTIQUEMENT TRANSPARENTS

(84) Designated Contracting States:
**AT BE BG CH CY CZ DE DK EE ES FI FR GB GR IE IT LI LU MC NL PT SE SK TR**

(30) Priority: **02.08.2001 US 309539 P**

(43) Date of publication of application:
**06.05.2004 Bulletin 2004/19**

(73) Proprietor: **3M Innovative Properties Company**
**St. Paul, MN 55133-3427 (US)**

(72) Inventors:
- **YANG, Jie**
  **Saint Paul, MN 55133-3427 (US)**
- **KLUN, Thomas P.,**
  **Saint Paul, MN 55133-3427 (US)**
- **PHAM, Phat,**
  **Saint Paul, MN 55133-3427 (US)**
- **EITZMAN, Diana M.,**
  **Saint Paul, MN 55133-3427 (US)**
- **CAMPBELL, Jennings B.,**
  **Saint Paul, MN 55133-3427 (US)**

(74) Representative: **VOSSIUS & PARTNER**
**Siebertstrasse 4**
**81675 München (DE)**

(56) References cited:
**EP-A- 0 873 986**
**WO-A-01/36558**
**WO-A-97/08260**
**US-A- 5 817 376**

- **DATABASE WPI Section Ch, Week 199734 Derwent Publications Ltd., London, GB; Class A14, AN 1997-369726 XP002215779 & JP 09 157597 A (SEKISUI CHEM IND CO LTD) , 17 June 1997 (1997-06-17)**
- **DATABASE WPI Section Ch, Week 200112 Derwent Publications Ltd., London, GB; Class A81, AN 2001-105546 XP002215780 & JP 2000 273417 A (LINTEC CORP), 3 October 2000 (2000-10-03)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 414 896 B1

## Description

The present invention relates to optically clear pressure sensitive adhesives comprising antistatic agents.

Static charges are generated everywhere. Electrostatic charge buildup is responsible for a variety of problems in the processing and use of many industrial products and materials. Electrostatic charging can cause materials to stick together or to repel one another. In addition, static charge buildup can cause objects to attract dirt and dust, which can lead to fabrication or soiling problems and can impair product performance.

Static is a particular problem in the electronics industry, since modem electronic devices are extremely susceptible to permanent damage by static electric discharges. The buildup of static charge on insulating objects is especially common and problematic under conditions of low humidity and when liquids or solids move in contact with one another (tribocharging).

In the electronic display industry, for example, static charges are generated on display surfaces like CRT monitors. These static charges attract dust from the air, and are also safety hazards. An optically clear and antistatic pressure sensitive adhesive, together with a display film such as a CRT transmission control film, can be applied to a CRT surface to dissipate the static charges. In the automotive and architectural window film industry, static charges are generated on pressure sensitive adhesive surfaces during the removal of a release liner. These static charges may attract dust, and result in unacceptable laminates.

Static charge buildup can be controlled by increasing the electrical conductivity of a material. This can be accomplished by increasing ionic or electronic conductivity. The most common means of controlling static accumulation today is by increasing electrical conductivity through moisture adsorption. This is commonly achieved by adding moisture to the surrounding air (humidification) or by use of hygroscopic antistatic agents, which are generally referred to as humectants since they rely on the adsorption of atmospheric moisture for their effectiveness. Most antistatic agents operate by removing static charge as it builds up; thus, static decay rate and surface conductivity are common measures of the effectiveness of antistatic agents.

However, it has been difficult to add antistatic agents to an optically clear pressure sensitive adhesive while maintaining optical clarity in the resulting film such as a CRT transmission control film because antistatic agents have been generally insoluble or incompatible with the pressure sensitive adhesive. Additionally, an optically clear pressure sensitive adhesive that may yellow over time, or become hazy or reflective, is undesirable for many applications. Therefore, there has been a need for optically clear and antistatic pressure sensitive adhesives for optical displays, as well as other optical film applications where pressure sensitive adhesive and release liners are used.

The present invention is directed to an antistatic pressure sensitive adhesive. The antistatic pressure sensitive adhesive comprises a pressure sensitive adhesive, and an antistatic agent comprising at least one particular organic salt as defined in the claims. Certain embodiments of the antistatic pressure sensitive adhesive also have a luminous transmission of greater than about 89% according to ASTM D 1003-95. Additional embodiments of the antistatic pressure sensitive adhesive have a haze of less than about 5% according to ASTM D 1003-95, and in specific embodiments the haze is less than about 2% according to ASTM D 1003-95.

The antistatic pressure sensitive adhesive generally has the particular organic salt present in at least about 5 % by weight of the antistatic pressure sensitive adhesive. Specific embodiments have at least 10% organic salt.

The surface resistivity of the antistatic pressure sensitive adhesive is less than about $1 \times 10^{13}$ Ohms/Square. In certain embodiments, the surface resistivity is less than about $1 \times 10^{11}$ Ohms/Square.

### Pressure Sensitive Adhesive

Any suitable pressure sensitive adhesive composition can be used for this invention. In specific embodiments, the pressure sensitive adhesive is optically clear. The pressure sensitive adhesive component can be any material that has pressure sensitive adhesive properties. Pressure sensitive adhesives are well known to one of ordinary skill in the art to possess properties including the following: (1) aggressive and permanent tack, (2) adherence to a substrate with no more than finger pressure, (3) sufficient ability to hold onto an adherend, and (4) sufficient cohesive strength to be removed cleanly from the adherend. Furthermore, the pressure sensitive adhesive component can be a single pressure sensitive adhesive or the pressure sensitive adhesive can be a combination of two or more pressure sensitive adhesives.

Pressure sensitive adhesives useful in the present invention include, for example, those based on natural rubbers, synthetic rubbers, styrene block copolymers, polyvinyl ethers, poly (meth)acrylates (including both acrylates and methacrylates), polyolefins, and silicones.

The optically clear pressure sensitive adhesives are generally acrylate-based pressure sensitive adhesives. However, silicone based pressure sensitive adhesives, rubber resin based pressure sensitive adhesives, block copolymer-based adhesives, especially those comprising hydrogenated elastomers, or vinylether polymer based pressure sensitive adhesives may also have optically clear properties.

Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms.

In one embodiment, the pressure sensitive adhesive is based on at least one poly(meth)acrylate (e.g., is a (meth)acrylic pressure sensitive adhesive). Poly(meth)acrylic pressure sensitive adhesives are derived from, for example, at least one alkyl (meth)acrylate ester monomer such as, for example, isooctyl acrylate, isononyl acrylate, 2-methyl-butyl acrylate, 2-ethyl-n-hexyl acrylate and n-butyl acrylate, isobutyl acrylate, hexyl acrylate, n-octyl acrylate, n-octyl methacrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate; and at least one optional co-monomer component such as, for example, (meth)acrylic acid, vinyl acetate, N-vinyl pyrrolidone, (meth)acrylamide, a vinyl ester, a fumarate, a styrene macromer, alkyl maleates and alkyl fumarates (based, respectively, on maleic and fumaric acid), or combinations thereof.

In certain embodiments, the poly(meth)acrylic pressure sensitive adhesive is derived from between about 0 and about 20 weight percent of acrylic acid and between about 100 and about 80 weight percent of at least one of isooctyl acrylate, 2-ethyl-hexyl acrylate or n-butyl acrylate composition. One specific embodiment for the present invention is derived from between about 2 and about 10 weight percent acrylic acid and between about 90 and about 98 wcight percent of at least one of isooctyl acrylate, 2-ethyl-hexyl acrylate or n-butyl acrylate composition. One specific embodiment for the present invention is derived from about 2 weight percent to about 10 weight percent acrylic acid, about 90 weight percent to about 98 weight percent of isooctyl acrylate. Additional embodiments include about 70% by weight phenoxy ethyl acrylate and between about 25% by weight and about 30% by weight isooctyl acrylate. Such an embodiment may additionally contain between about 1% by weight and about 5% by weight acrylic acid.

The pressure sensitive adhesive may be inherently tacky. If desired, tackifiers may be added to a base material to form the pressure sensitive adhesive. Useful tackifiers-include, for example, rosin ester resins, aromatic hydrocarbon resins, aliphatic hydrocarbon resins, and terpene resins. Other materials can be added for special purposes, including, for example, oils, plasticizers, antioxidants, ultraviolet ("UV") stabilizers, hydrogenated butyl rubber, pigments, curing agents, polymer additives, thickening agents, chain transfer agents and other additives provided that they do not reduce the optical clarity of the pressure sensitive adhesive.

<u>Antistatic Agent</u>

An antistatic agent operates by removing static charge as it builds up. Antistatic agents useful in the present invention include non-polymeric and polymeric organic salts. Non-polymeric salts have no repeat units. Organic salts, for the purpose of the present invention, are defined as salts that are free of metal ions and have at least one organic substituent present on both the cation and the anion. An organic substituent is a group that is at least monovalent and contains at least one carbon atom and may contain hydrogen, phosphorous, fluorine, boron or heteroatoms, for example oxygen, sulfur, and nitrogen, or combinations thereof. Generally, the antistatic agent comprises at least about 5% by weight of the antistatic pressure sensitive adhesive. In some embodiments, the antistatic agent comprises at least about 10% by weight of the antistatic pressure sensitive adhesive. The antistatic agent may be loaded into the pressure sensitive adhesive at weight percentages of about 30% by weight or higher, because the organic antistatic agent is compatible in the pressure sensitive adhesive, allowing for high load capability. A higher load of antistatic agent reduces surface resistivity. Generally, the antistatic agent is added in an amount that will not affect the optical clarity of the antistatic pressure sensitive adhesive. In certain embodiments, the antistatic agent is loaded into the antistatic pressure sensitive adhesive between about 5% and about 50%, at any number within that range (e.g., 7%, 16%, etc.).

The organic salts are compatible with a variety of polymers. Many of the salts are also hydrophobic (immiscible in water), and so their antistatic performance is relatively independent of atmospheric humidity levels and durable even under exposure to aqueous environments.

The antistatic agent comprises a non-polymeric or polymeric organic nitrogen, sulfonium or phosphonium onium cation and a weakly coordinating organic anion. In certain embodiments, the antistatic agent can have more than one onium cation. In certain embodiments, the Hammett acidity function, $H_0$, of the conjugate acid of the anion is less than about -10, generally less than -12. Such weakly coordinating organic anions include those that comprise at least one highly fluorinated alkanesulfonyl group.

Suitable weakly coordinating anions have a conjugate acid that is at least as acidic as a hydrocarbon sulfonic acid (for example, a hydrocarbon sulfonic acid having from 1 to about 20 carbon atoms; such as, an alkane, aryl, or alkaryl sulfonic acid having from 1 to about 8 carbon atoms; and in specific examples, methane or p-toluene sulfonic acid; most preferably, p-toluene sulfonic acid). Generally, the conjugate acid is a strong acid. For example, the Hammett acidity function, $H_0$, of the neat conjugate acid of the anion is less than about -7 (preferably, less than about -10).

Examples of suitable weakly coordinating anions include organic anions such as alkane, aryl, and alkaryl sulfonates; alkane, aryl, alkaryl sulfates; fluorinated and unfluorinated tetraarylborates; and fluoroorganic anions such

as fluorinated arylsulfonates, perfluoroalkanesulfonates, cyanoperfluoroalkanesulfonylamides, bis(cyano)perfluoroalkanesulfonylmethides, bis(perfluoroalkanesulfonyl)imides, cyano-bis-(perfluoroalkanesulfonyl)methides, bis(perfluoroalkanesulfonyl)methides, and tris(perfluoroalkanesulfonyl)memides; and the like.

Examples of suitable weakly coordinating fluororganic anions include the following structures:

$$R_6SO_3^{\ominus} \qquad (I)$$

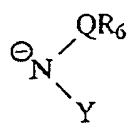

(II)

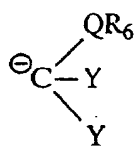

(III)

wherein each $R_6$ is independently a fluorinated alkyl or aryl group that may be cyclic or acyclic, saturated or unsaturated, and may optionally contain catenated ("in-chain") or terminal beteroatoms such as N, O, and S (e.g., $-SF_4-$ or $-SF_5$). Q is independently an $SO_2$ or a CO linking group and Y is selected from the group $QR_6$, CN, halogen, H, alkyl, aryl, Q-alkyl, and Q-aryl. Any two contiguous $R_6$ groups may be linked to form a ring. Preferably, $R_6$ is a perfluoroalkyl group, Q is $SO_2$ and each Y is $QR_6$.

The fluoroorganic anions can be either fully fluorinated, that is perfluorinated, or partially fluorinated (within the organic portion thereof). Preferred fluoroorganic anions include those that comprise at least one highly fluorinated alkanesulfonyl group, that is, a perfluoroalkanesulfonyl group or a partially fluorinated alkanesulfonyl group wherein all non-fluorine carbon-bonded substituents are bonded to carbon atoms other than the carbon atom that is directly bonded to the sulfonyl group (preferably, all non-fluorine carbon-bonded substituents are bonded to carbon atoms that are more than two carbon atoms away from the sulfonyl group).

Specifically, antistatic agents such as those described in U.S. Patent Number 6,372,829 to Lamanna et al., assigned to 3M Innovative Properties Company, are available for the optically clear antistatic pressure sensitive adhesive of the present invention. That application teaches ionic salts suitable for use as an antistatic agent comprising n-polymeric nitrogen onium cation and a weakly coordinating fluoroorganic (either fully fluorinated, that is perfluorinated, or partially fluorinated) anion.

The nitrogen onium cation can be cyclic (that is, where the nitrogen atom(s) of the cation arc ring atoms) or acyclic (that is, where the nitrogen atom(s) of the cation arc not ring atoms but can have cyclic substituents). The cyclic cations can be aromatic, saturated, or can possess degrees of saturation and the acyclic cations can be saturated or unsaturated. The cyclic cations may comprise ring heteroatoms other than nitrogen (for example, oxygen or sulfur), and the ring atoms can hear substituents (for example, hydrogen, halogen, or organic groups such as alkyl, alicyclic, aryl, alkalicyclic, alkaryl, alicyclicalkyl, aralkyl, aralicyclic, and alicyclicaryl groups). Separate alkyl substitucnts can be joined together to constitute a unitary alkylene radical of from 2 to 4 carbon atoms forming a ring structure converging on nitrogen.

One specific class of ionic salts useful in preparing the antistatic agent of the invention is the class of novel non-polymeric or polymeric compounds represented by the general formula below:

$$(R_1)_{t-v}G^+[(CH_2)_qOR_2]_v\ X^- \qquad (IV)$$

wherein each $R_1$ comprises alkyl, alicyclic, aryl, alkalicyclic, alkaryl, alicyclicalkyl, aralkyl, aralicyclic, or alicyclicaryl moieties, wherein the moieties may comprise one or more heteroatoms such as, for example, nitrogen, oxygen, or

sulfur, or may comprise phosphorus, or a halogen (and thus can be fluoroorganic in nature); each $R_2$ comprises hydrogen or the moieties described above for $R_1$; G is nitrogen, sulfur or phosphorous; if G is sulfur then t is 3, if G is nitrogen or phosphorous then t is 4; v is an integer of 1 to 3 is G is sulfur or an integer of 1 to 4 if F is nitrogen or phosphorous; q is an integer of 1 to 4; and X is a weakly coordinating organic anion, such as a fluoroorganic anion. $R_1$ is preferably alkyl, and $R_2$ is preferably hydrogen, alkyl, or acyl (more preferably, hydrogen or acyl; most preferably, hydrogen).

Representative examples of useful ionic salts include:

octyldimethyl-2-hydroxyethylammonium bis(trifluoromethylsulfonyl)imide: $[C_8H_{17}N^+(CH_3)_2CH_2CH_2OH]$ $[^-N(SO_2CF_3)_2]$,
octyldimethyl-2-hydroxyethylammonium perfluorobutanesulfonate: $[C_8H_{17}N^+(CH_3)_2CH_2CH_2OH]$ $[^-OSO_2C_4F_9]$,
octyldimethyl-2-hydroxyethylammonium trifluoromethanesulfonate: $(C_8H_{17}N^+(CH_3)_2CH_2CH_2OH]$ $[^-OSO_2CF_3]$,
octyldimethyl-2-hydroxyethylammonium tris(trifluoromethanesulfonyl)methide: $[C_8H_{17}N^+(CH_3)_2CH_2CH_2OH]$ $[^-C(SO_2CF_3)_3]$,
trimethyl-2-acetoxyethylammonium bis(trifluoromethylsulfonyl)imide: $[(CH_3)_3N^+CH_2CH_2OC(O)CH_3]$ $[^-N(SO_2CF_3)_2]$,
trimethyl-2-hydroxyethylammonium bis(perfluorobutanesulfonyl)imide: $[(CH_3)_3N^+CH_2CH_2OH]$ $[^-N(SO_2C_4F_9)_2]$,
triethylammonium bis(perfluoroethanesulfonyl)imide: $[Et_3N^+H]$ $[^-N(SO_2C_2F_5)_2]$,
tetraethylammonium trifluoromethanesulfonate: $[^+NEt_4]$ $[CF_3SO_3^-]$,
tetraethylammonium bis(trifluoromethanesulfonyl)imide: $[^+NEt_4]$ $[(CF_3SO_2)_2N^-]$,
tetramethylammonium tris(trifluoromethanesulfonyl)methide: $[(CH_3)_4N^+]$ $[C(SO_2CF_3)_3]$,
tetrabutylammonium bis(trifluoromethanesulfonyl)imide: $[(C_4H_9)_4N^+]$ $[^-N(SO_2CF_3)_2]$,
trimethyl-3-perfluorooctylsulfonamidopropylammonium bis(trifluoromethanesulfonyl)imide: $[C_8F_{17}SO_2NH(CH_2)_3N^+(CH_3)_3]$ $[^-N(SO_2CF_3)_2]$,
1-hexadecylpyridinium bis(perfluoroethanesulfonyl)imide: [n-$C_{16}H_{33}$-*cyc*-$N^+C_5H_5$] $[^-N(SO_2C_2F_5)_2]$,
1-hexadecylpyridinium perfluorobutanesulfonate: [n-$C_{16}H_{33}$-*cyc*-$N^+C_5H_5$] $[^-OSO_2C_4F_9]$,
1-hexadecylpyridinium perfluorooctanesulfonate: [n-$C_{16}H_{33}$-*cyc*-$N^+C_5H_5$] $[^-OSO_2C_8F_{17}]$,
n-butylpyridinium bis(trifluoromethanesulfonyl)imide: [n-$C_4H_9$-*cyc*-$N^+C_5H_5$] $[^-N(SO_2CF_3)_2]$,
n-butylpyridinium perfluorobutanesulfonate: [n-$C_4H_9$-*cyc*-$N^+C_5H_5$] $[^-OSO_2C_4F_9]$,
1,3-ethylmethylimidazolium bis(trifluoromethanesulfonyl)imide: [$CH_3$-*cyc*-$(N^+C_2H_2NCH)CH_2CH_3$] $[^-N(SO_2CF_3)_2]$,
1,3-ethylmethylimidazolium nonafluorobutanesulfonate: [$CH_3$-*cyc*-$(N^+C_2H_2NCH)CH_2CH_3$] $[^-OSO_2C_4F_9]$,
1,3-ethylmethylimidazolium trifluoromethanesulfonate: [$CH_3$-*cyc*-$(N^+C_2H_2NCH)CH_2CH_3$] $[^-OSO_2CF_3]$,
dodecylmethyl-bis(2-hydroxyethyl)ammonium bis(trifluoromethylsulfonyl)imide: $[C_{12}H_{25}N^+(CH_3)(CH_2CH_2OH)_2]$ $[^-N(SO_2CF_3)_2]$
1,2-dimethyl-3-propylirnidazolium bis(trifluoromethanesulfonyl)imide,
1 ,2-dimethyl-3-propylimidazolium tris(trifluoromethanesulfonyl)methide,
1,2-dimethyl-3-propylimidazolium trifluoromethanesulfonyl perfluorobutanesulfonylimide,
1-ethyl-3-methylimidazolium cyanotriftuoromethanesulfonylamide,
1-ethyl-3-methylimidazolium bis(cyano)trifluoromethanesulfonylmethide,
1-ethyl-3-methylimidazolium trifluoromethanesulfonylperfluorobutanesulfonylimide,
octyldimethyl-2-hydroxyethylammonium trifluoromethylsulfonylperfluorobutanesulfonylimide,
2-hydroxyethytrimethyl trifluoromethylsulfonylperfluorobutanesulfonylimide,
2-methoxyethyltrimethylammonium bis(trifluoromethanesulfonyl)imide octyldimethyl-2-hydroxyethylammonium bis(cyano)trifluoromethanesulfonylmethide,
trimethyl-2-acetoxyethylammonium trifluoromethylsulfonylperfluorobutanesulfonylimide,
1-butylpyridinium trifluoromethylsulfonylperfluorobutanesulfonylimide,
2-ethoxyethyltrimethylammonium trifluoromethanesulfonate,
1-butyl-3-methylimidazolium perfluorobutanesulfonate,
perfluoro-1-ethyl-3-methylimidazolium bis(trifluoromethanesulfonyl)imide,
1-ethyl-2-methylpyrazolium perfluorobutanesulfonate,
1-butyl-2-ethylpyrazolium trifluoromethanesulfonate,
N-ethylthiazolium bis(trifluoromethanesulfonyl)imide,
N-ethyloxazolium bis(tritluoromethanesulfonyl)imide,
1-butylpyrimidinium perfluorobutanesulfonylbis(trifluoromethanesulfonyl)-methide, and mixtures thereof.

Specific examples of organic salts include:

octyldimethyl-2-hydroxyethylammonium trifluoromethanesulfonate: $[C_8H_{17}N^+(CH_3)_2CH_2CH_2OH]$ $[^-OSO_2CF_3]$,

octyldimethyl-2-hydroxyethylammonium bis(trifluommethylsulfonyl)imide: $[C_8H_{17}N^+(CH_3)_2CH_2CH_2OH]$ $[^-N(SO_2CF_3)_2]$,
dodecylmethyl-bis(2-hydroxyethyl)ammonium bis(trifluoromethylsulfonyl)imide: $[C_{12}H_{25}N^+(CH_3)(CH_2CH_2OH)_2]$ $[^-N(SO_2CF_3)_2]$
octyldimethyl-2-hydroxyethylammonium methanesulfonate,
triethylammonium bis[(trifluoromethyl)sulfonyl] imide.

Another specific class of ionic salts useful in preparing the antistatic agent of the invention is the class of novel non-polymeric or polymeric compounds having at least one cation having at least one polyoxyalkylene moiety bonded to at least one cationic nitrogen center. The polymeric salts have at least one organic anion that is weakly coordinating.

The polyoxyalkylene ammonium compounds comprise cations. Additionally, these polyoxyalkylene ammonium compounds comprise ammonium groups attached to the end of a polyoxyalkylene chain. The polyoxyalkylene chain is typically based either on propylene oxide, ethylene oxide, or mixed ethylene/propylene oxide. The polyoxyalkylene ammonium compounds comprise mono-ammonium, di-ammonium, and tri-ammonium compounds having molecular weights ranging from about 200 to about 10,000.

Particularly representative polyoxyalkylene ammonium compounds are those wherein the cation is represented by the following general formulae illustrated below, where the number of repeat units for the polyoayalkylene moieties is approximate:

(V)

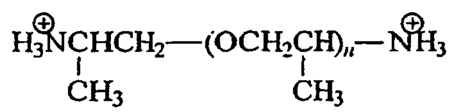

(VI)

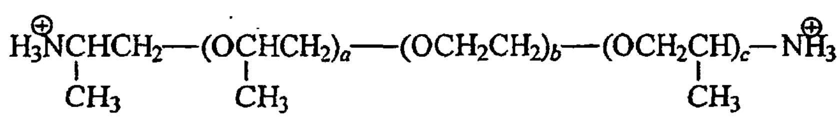

(VII)

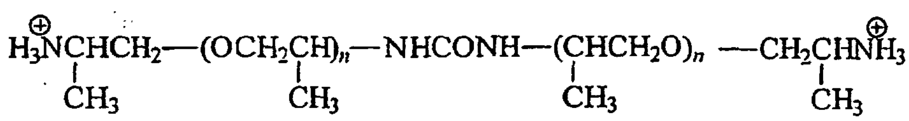

(VIII)

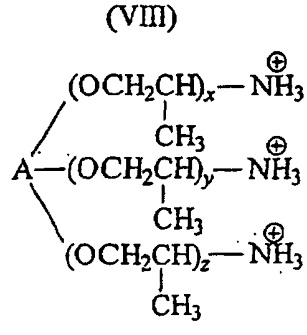

(IX)

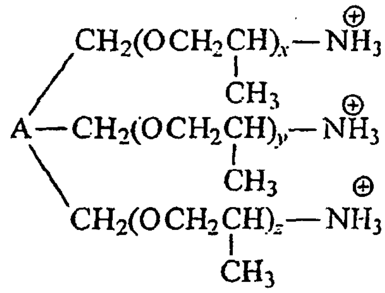

(X)

$$^{+}N\ [(R_4)_{4-d}][(POA)R_5]_d$$

wherein, n is an integer of 3 to 50, b is an integer of 5 to 150, a and c, the same or different, each is an integer from 0 to 5, where a+c is an integer from 2 to 5, A is a CH≡ ,$CH_3C$≡ , $CH_3CH_2C$≡ , or a

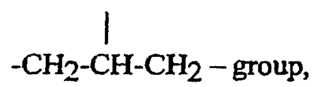

group,

x, y and z, equal or different, are integers of 1 to 30 such that the sum of x + y + z ≥ 5, POA is either a homopolymer or a copolymer that is random, blocked, or alternating, and POA comprises 2 to 50 units represented by the formula $((CH_2)_mCH(R_3)O)$ where each unit independently has m, an integer from 1 to 4, and $R_3$. $R_3$ is independently hydrogen or a lower alkyl group (i.e., containing 1 to 4 carbon atoms). $R_4$ is independently an alkyl, an alicyclic, an aryl, an alkalicyclic, an arylalicyclic, or an alicyclicaryl group that optionally contains one or more heteroatoms (e.g., sulfur, nitrogen, oxygen), chlorine, bromine, or fluorine. $R_5$ is independently hydrogen, an alkyl, an alicyclic, an aryl, an alkalicyclic, an arylalicyclic, or an alicyclicaryl group that optionally contains one or more heteroatoms (e.g., sulfur, nitrogen, oxygen), chlorine, bromine, or fluorine. And d is an integer from 1 to 4.

Examples of polyoxyalkylene amine compounds useful as precursors to the antistatic agents of the present invention are illustrated below. The number of repeat units for the polyoxyalkylene moieties is approximate.

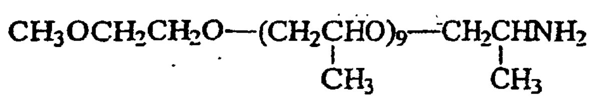

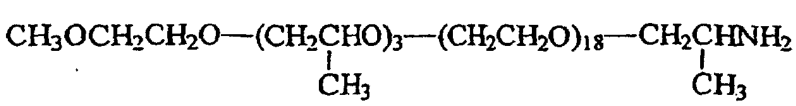

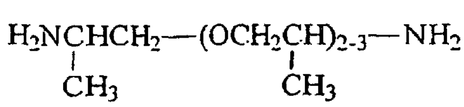

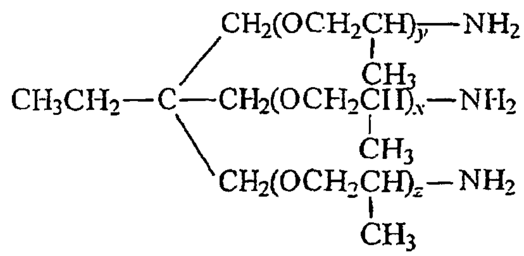

wherein $x + y + z \sim 5\text{-}6$

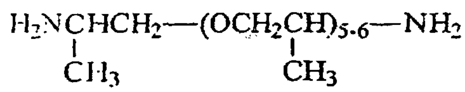

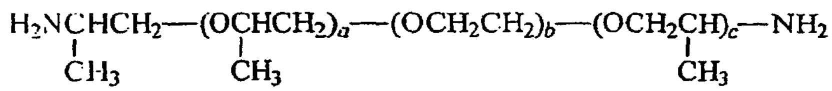

wherein $b$ is ~8.5 and $a + c$ is ~2.5

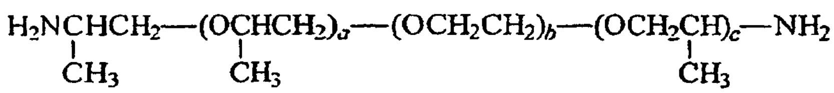

wherein $b$ is ~15.5 and $a + c$ is ~2.5

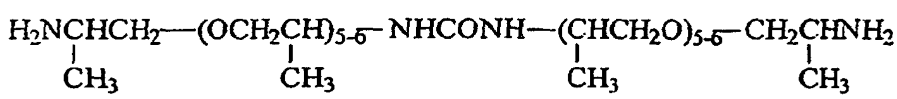

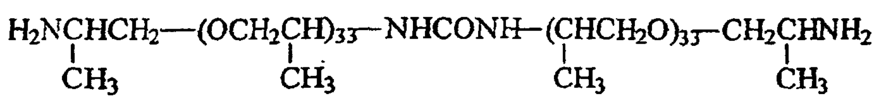

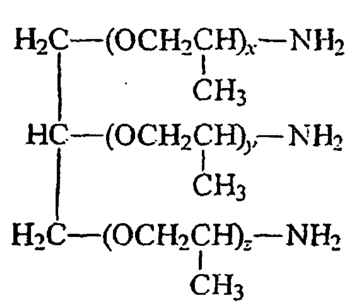

wherein $x + y + z$ ~30
and

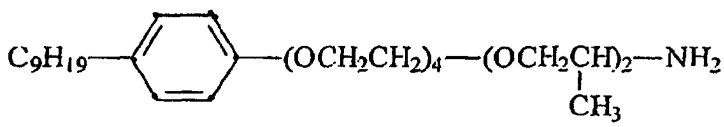

The polyoxyalkylene ammonium compounds of the present invention can be prepared using methods known in the art.

Specific examples of polyoxyalkylene ammonium compounds that are useful as precursors to antistatic agents of the present invention are, for example,

$[C_{12}H_{25}N^{+}(CH_3)(CH_2CH_2O)_mH(CH_2CH_2O)_nH]Cl^{-}$; (m+n=15)
$[C_6H_5CH_2N^{+}(CH_3)(CH_2CH_2O)_mH(CH_2CH_2O)_nH]Cl^{-}$; (m+n=15), where $C_6H_5CH_2$= benzyl
$[C_{12}H_{25}N^{+}(CH_3)_2(CH_2CH_2CH_2CH_2O)_mH]\ Cl^{-}$; (m=15)
$[N^{+}(CH_2CH_2O)_mH(CH_2CH_2O)_nH(CH_2CH_2O)_oH(CH_2CH_2O)_pH]Cl^{-}$; (m+n+o+p=20)

Examples of polyoxyalkylene ammonium compounds that are useful as antistatic agents of the present invention are illustrated below. The number of repeat units for the polyoxyalkylene moieties is approximate.

$[C_{18}H_{37}N^{+}(CH_3)(CH_2CH_2O)_mH\ (CH_2CH_2O)_nH][^{-}O_3SO(CH_2)_nCH_3]$; (m+n=15)
$(C_{18}H_{37}N^{+}(CH_3)(CH_2CH_2O)_mH(CH_2CHCH_3O)_nH][^{-}O_3SOCH_3]$; (m+n=15)
$[C_{12}H_{25}N^{+}(CH_3)(CH_2CH_2O)_mH(CH_2CH_2O)_nH][^{-}O_3SC_6H_4C_{12}H_{25}]$; (m+n=5)
$[C_{12}H_{25}N^{+}(CH_3)_2(CH_2CHCH_3O)_mH][^{-}O_3SCH_3]$, (m=15)
$[C_{12}H_{25}O(CH_3)_2(CH_2CH_2O)_mH][^{-}O_3SOCH_3]$; (m=15)
$[C_8H_{17}N^{+}(CH_3)_2(CH_2CH_2O)_mH][^{-}O_3SO(CH_2)_{11}CH_3]$; (m=8), and
$[C_{12}H_{25}N^{+}(CH_2CH_2O)_mH(CH_2CH_2O)_oH(CH_2CH_2O)_oH][^{-}O_3SOCH_3]$; (m+n+o=15).

Examples of difunctional or trifunctional amine terminated polyethylene oxides useful as precursors to the antistatic agents of the present invention include, but are not limited to, JEFFAMINE™ Polyalkylene Amines, available from Huntsman Corporation, Salt Lake City, UT. JEFFAMINE™ Polyalkylene Amines are generally described as containing primary amino groups attached to the terminus of a polyether backbone. The polyether backbone is based either on propylene oxide, ethylene oxide, or mixed propylene oxide/ethylene oxide.

Examples of quaternary polyoxyalkylene ammonium salts useful as antistatic agents of the present invention or as precursors to the antistatic agents of the present invention include $C_{12}H_{25}N^{+}(CH_3)[(CH_2CH_2O)_mH][(CH_2CH_2O)_mH]^{-}Cl$; (m+n =15), which is ETHOQUAD™ C/25, and $C_{18}H_{37}N^{+}(CH_3)[(CH_2CH_2O)_mH][(CH_2CH_2O)_nH]^{-}Cl$ (m+n=15), which is ETHOQUAD™ 18/25, (both are available from Akzo Nobel Surface Chemistry LLC, Chicago, IL), $C_{12}H_{25}N^{+}(CH_3)[(CH_2CH_2O)_mH][(CH_2CH_2O)_nH]^{-}\ OSO_3CH_3$ (m+n=5), which is derived from ETHOMEEN™ C/15 (available from Akzo Nobel Surface Chemistry LLC.) via its reaction with dimethylsulfate, is a useful antistatic agent of the present invention and can also be used as a precursor to other antistatic agents of the present invention.

Additional examples include those antistatic agents having polyoxyalkylene moieties:

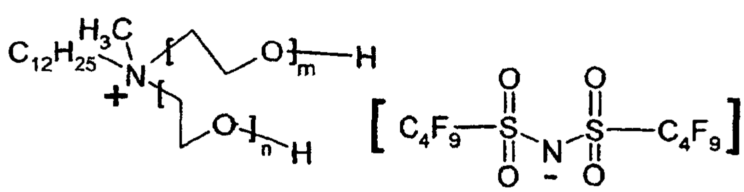

where m + n = 15

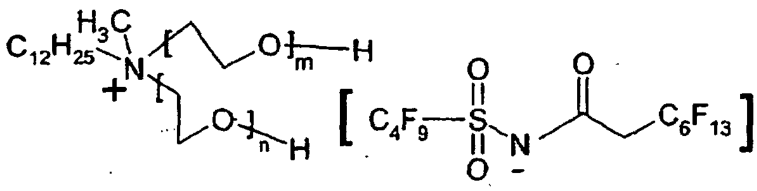

where m + n =15

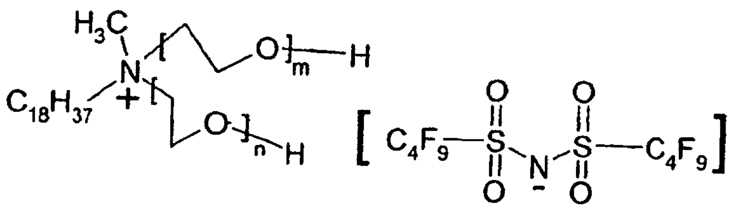

where m+n= 15

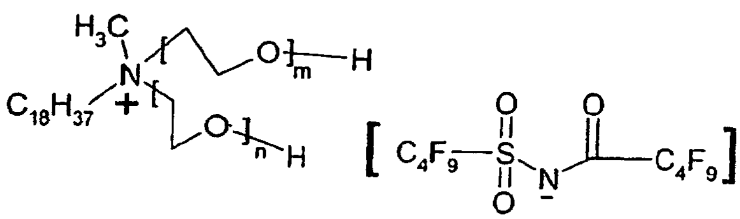

where m + n = 15

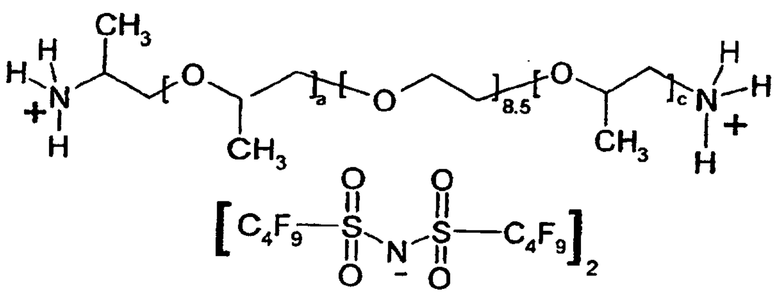

where a + c ~ 2.5

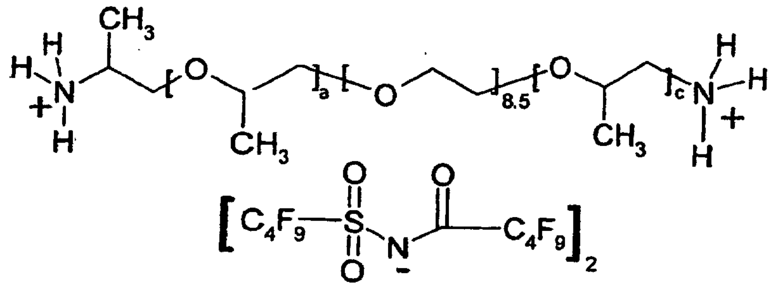

where a + c ~ 2.5

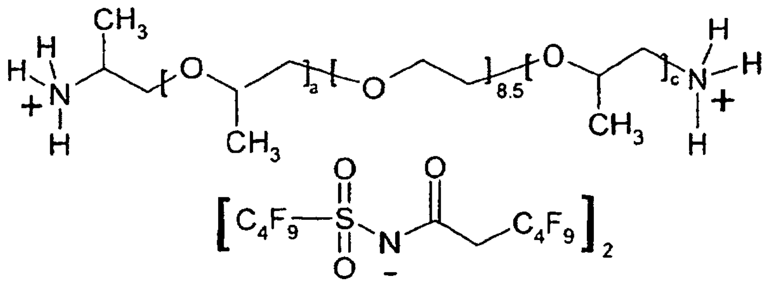

where a + c ~ 2.5

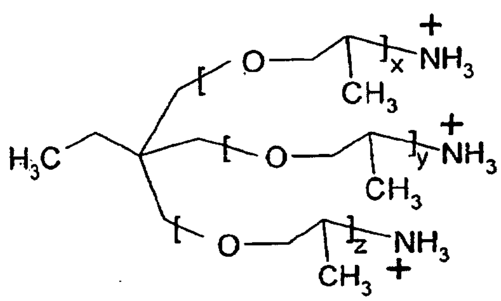

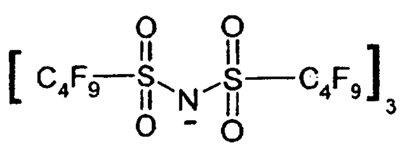

where x + y + z~5.3

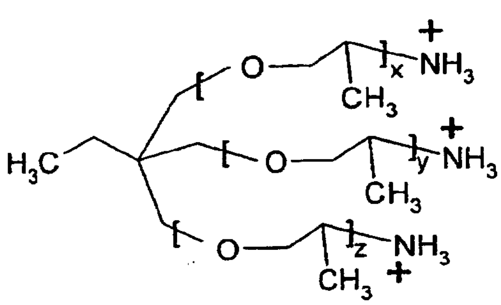

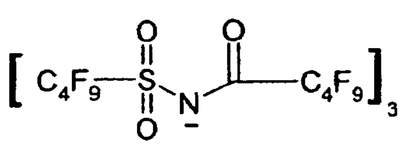

wherex+y+z~5.3

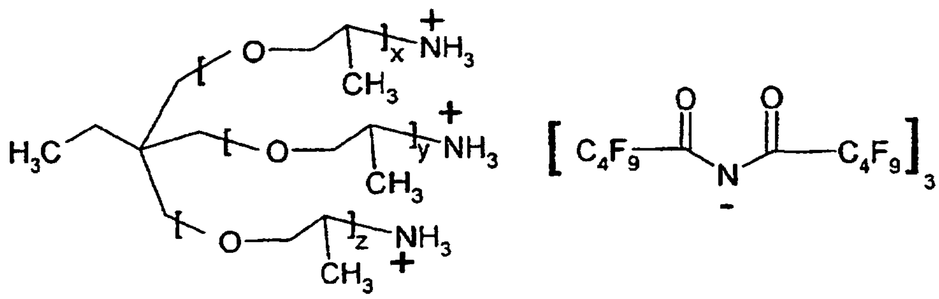

wherex+y+z~5.3

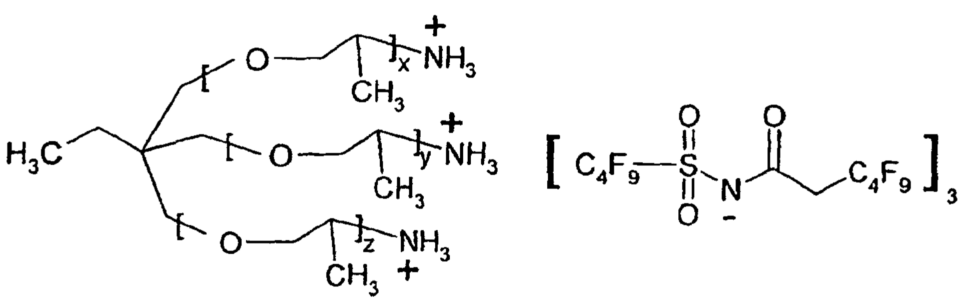

where x + y + z ~ 5.3

$C_{12}H_{25}N^+[CH_3][(CH_2CH_2O)_mH][(H_2CH_2O)_nH]\ ^-N(SO_2C_4F_9)_2$; (m+n =15),
$C_{18}H_{37}N^+[CH_3][(CH_2CH_2O)_mH][(CH_2CH_2O)_nH]\ ^-N(SO_2C_4F_9)_2$;(m+n=15),
$C_{12}H_{25}N^+[CH_3][(CH_2CH_2O)_mH][(CH_2CH_2O)_nH]\ ^-N(SO_2C_4F_9)_2$; (m+n=5),

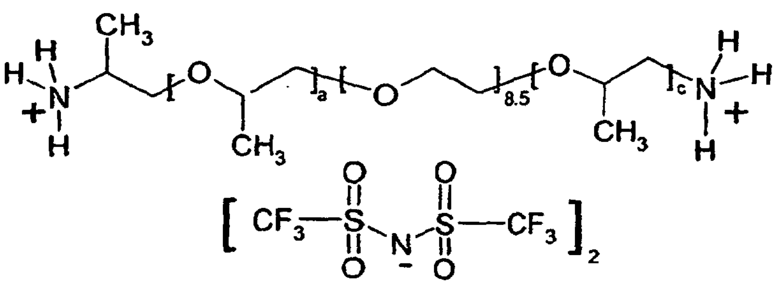

where a + c ~ 2.5

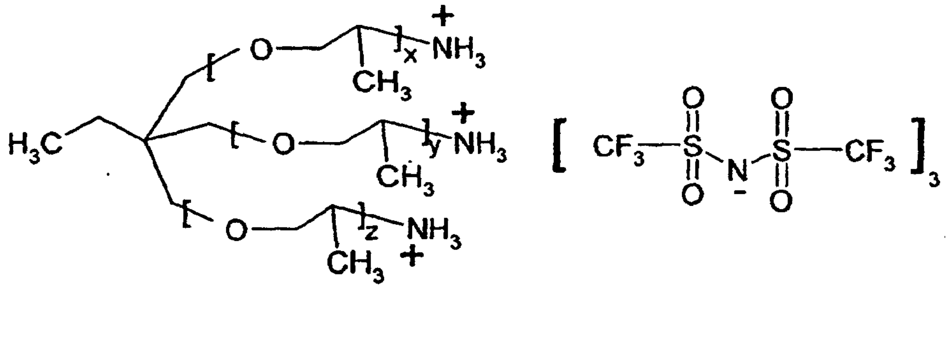

where x + y + z ~ 5.3

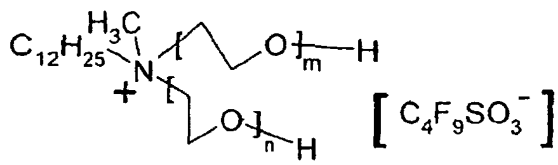

where m + n = 15

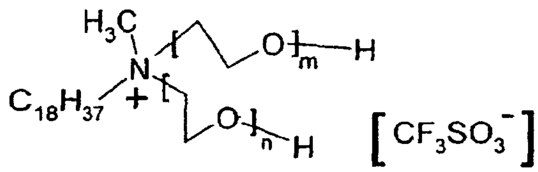

where m + n = 15

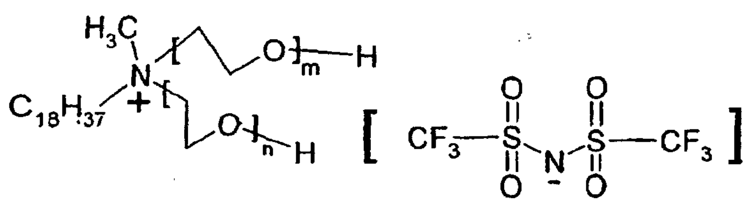

where m+n=15

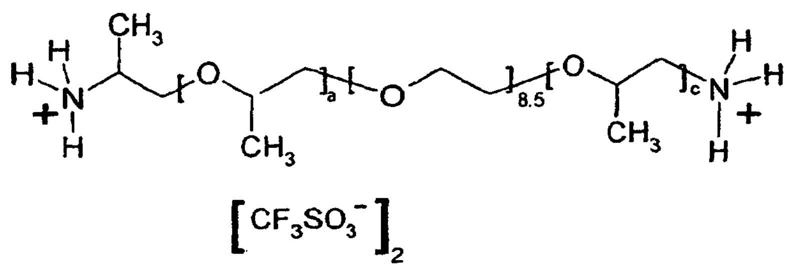

where a + c ~ 2.5

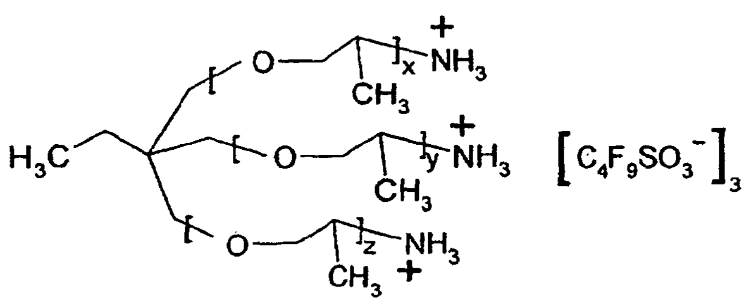

where x + y + z ~ 5.3

$[C_{12}H_{25}N^{+}(CH_3)(CH_2CH_2O)_mH(CH_2CH_2O)_nH][^{-}O_3SCF_3]$; (m+n=15),

$[C_{12}H_{25}N^+(CH_3)(CH_2\text{-}CH_2O)_mH(CH_2CH_2O)_nH][^-N(SO_2CF_3)_2$; (m + n = 15)
$[C_6H_5CH_2N^+(CH_3)(CH_2CH_2O)_mH(CH_2CH_2O)_nH][^-O_3SC_4F_9]$; (m+n=15), where $C_6H_5CH_2$ = benzyl
$[C_{12}H_{25}N^+(CH_3)(CH_2CH_2O)_mH(CH_2CH_2O)_nH][^-O_3SC_4F_9]$; (m+n=15)
$[C_{18}H_{37}N^+(CH_3)(CH_2CH_2O)_mH(CH_2CH_2O)_nH][^-O_3SCF_3]$; (m+n=15)
$[C_{18}H_{37}N^+(CH_3)(CH_2CH_2O)_mH(CH_2CH_2O)_nH[^-N(SO_2CF_3)_2]$; (m+n=15)
$[C_{18}H_{37}N^+(CH_3)(CH_2CH_2O)_mH(CH_2CH_2O)_nH][^-O_3SC_4F_9]$; (m+n=15)
$[C_{18}H_{37}N^+(CH_3)(CH_2CH_2O)_mH(CH_2CHCH_3O)_nH][^-O_3SC_4F_9]$; (m+n=15)
$[C_{12}H_{25}N^+(CH_3)(CH_2CH_2O)_mH(CH_2CH_2O)_nH][^-O_3SCF_3]$; (m+n=15)
$[C_8H_{17}N^+(CH_3)_2(CH_2CH_2O)_mH][^-O_3SCF_3]$; (m=15)
$[C_8H_{17}N^+(CH_3)_2(CH_2CH_2O)_mH][^-O_3SC_4F_9]$; (m=15)
$[C_8H_{17}N^+(CH_3)_2(CH_2CH_2O)_mH][^-N(SO_2CF_3)_2]$; (m=15)
$[C_{12}H_{25}N^{-+}(CH_3)_2(CH_2CH_2O)_mH][^-O_3SCF_3]$; (m=15)
$[C_{12}H_{25}N^+(CH_3)_2(CH_2CHCH_3O)_mH][^-O_3SCF_3]$; (m=15)
$[C_{12}H_{25}N^+(CH_3)_2(CH_2CH_2CH_2CH_2O)_mH][^-O_3SCF_3]$; (m=15)
$[C_{18}H_{37}N^+(CH_3)_2(CH_2CH_2O)_mH][^-N(SO_2CF_3)_2]$; (m=15)
$[C_8H_{17}N^+(CH_3)_2(CH_2CH_2O)_mH][^-O_3SCF_3]$; (m=8)
$[C_{18}H_{37}N^+(CH_3)_2\ (CH_2CH_2O)_mH][^-N(SO_2CF_3)_2]$; (m=8)
$(C_{12}H_{25}N^+\{(CH_2CH_2O)_mH\}\{(CH_2CH_2O)_nH\ \}\{(CH_2CH_2O)_oH\}][^-O_3SCF_3]$; (m+n+o=15),
$[C_{12}H_{25}N^+\{(CH_2CH_2O)_mH\}\{(CH_2CH_2O)_nH(CH_2CH_2O)_oH\}]\ [^-N(SO_2CF_3)_2]$; (m+n+o=15)
$[C_{12}H_{25}N^+\{(CH_2CH_2O)_mH\}\{(CH_2CH_2O)_nH(CH_2CH_2O)_oH\}][^-O_3SC_4F_9]$; (m+n+o=15)
$[N^+\{(CH_2CH_2O)_mH\}\{(CH_2CH_2O)_nH)(CH_2CH_2O)_oH(CH_2CH_2O)_pH\}][^-O_3SCF_3]$; (m+n+o+p=20)
$(N^+\{(CH_2CH_2O)_mH\}\{(CH_2CH_2O)_nH(CH_2CH_2O)_oH(CH_2CH_2O)_pH\}]\ [^-N(SO_2CF_3)_2]$; (m+n+o+p=20)
$[C_{12}H_{25}N^+\{(CH_3)(CH_2CH_2O)_mH\}\{(CH_2CH_2O)_nH\}]_2[^-O_3SCF_2CF_2CF_2SO_3\text{-}]$; (m+n=15)
$[C_{12}H_{25}N^+\{(CH_3)(CH_2CH_2O)_mH\}\{(CH_2CH_2O)_nH\}]_2[^-O_3S\text{-}CF_2CF_2\text{-}N(CF_2CF_2)_2N\text{-}CF_2CF_2SO_3^-]$;(m+n=15)
$[C_{12}H_{25}N^+\{(CH_3)(CH_2CH_2O)_mH\}\{(CH_2CH_2O)_nH\}][^-N(SO_2CF_3)CN]$; (m+n=15)
$[C_{12}H_{25}N^+\{(CH_3)(CH_2CH_2O)_mH\}\ \{(CH_2CH_2O)_nH\}][^-C(SO_2CF_3)_3]$; (m+n=15)
$[C_{12}H_{25}N^+\{(CH_3)(CH_2CH_2O)_mH\}\ \{(CH_2CH_2O)_nH\}][^-C(SO_2CF_3)_2CN]$; (m+n=15)
$[C_{12}H_{25}N^+\{(CH_3)(CH_2CH_2O)_mH\}\ \{(CH_2CH_2O)_nH\}][^-C(SO_2CF_3)_2Cl]$; (m+n=15)
$[C_{12}H_{25}N^+\{(CH_3)CH_2CH_2O)_mH\}\ \{(CH_2CH_2O)_nH\}][^-C(SO_2CF_3)ClCN]$; (m+n=15)
$[CH_3(OCH_2CH_2)_{19}(OCH_2CHCH_3)_2NH_3^+][^-N(SO_2CF_3)_2]$
$[C_{12}H_{25}N^+\{(CH_3)(CH_2CH_2O)_mH\}\ \{(CH_2CH_2O)_nH\}][^-O_3SC_6H_4CF_3]$; (m+n=15)
$[C_{12}H_{25}N^+\{(CH_3)(CH_2CH_2O)_mH\}\ \{(CH_2CH_2O)_nH\}][^-O_3SC_6F_5]$; (m+n=15)
$[C_{12}H_{25}N^+\{(CH_3)(CH_2CH_2O)_mH\}\{(CH_2CH_2O)_nH\}]_2[^-O_3SC_6F_4SO_3^-]$; (m+n=15)

In specific examples, the antislatic agents having polyoxyalkylene moieties including the following cations:

$[C_{12}H_{25}N^+(CH_3)\{(CH_2CH_2O)_mH\}\ \{(CH_2CH_2O)_nH\}]$; (m+n=15),
$[C_{18}H_{37}N^+(CH_3)\{(CH_2CH_2O)_mH\}\ \{(CH_2CH_2O)_nH\}]$; (m+n=15),
$[C_{12}H_{25}N^+(CH_3)\{(CH_2CH_2O)_mH\}\ \{(CH_2CH_2O)_nH\}]$; (m+n=5), and
$[C_{12}H_{25}N^+(CH_3)_2\{CH_2CH_2O)_mH\}]$; m=15

and having organic or fluoroorganic anions (preferably, anions selected from the group consisting of alkane sulfonates, aryl sulfonates, alkaryl sulfonates, perfluoroalkanesulfonates, bis(perfluoroalkanesulfonyl)imides, and tris(perfluoroalkanesulfonyl)methides; more preferably, alkane sulfonates, perfluoroalkanesulfonates, and bis(perfluoroalkanesulfonyl)imides); most preferably, perfluoroalkanesulfonates and bis(perfluoroalkanesulfonyl)imides, with the imides being especially preferred.

Specific examples of antistatic agents include:

$[C_{12}H_{25}N^+(CH_3)\{(CH_2CH_2O)_mH\}\{\{CH_2CH_2O)_nH\}]$; (m+n=15), or
$[C_{18}H_{37}N^+(CH_3)\{(CH_2CH_2O)_mH\}\{(CH_2CH_2O)_nH\}]$; (m+n=15), cations having an imide anion.

However, the proper antistatic agent for a given adhesive system must be chosen by finding a balance of properties in the cations and anions that make up the antistatic agents to achieve solubilities in particular adhesive formulations after curing.

<u>Antistatic Pressure Sensitive Adhesive</u>

The antistatic pressure sensitive adhesive is formed by forming a pressure sensitive adhesive and blending

the pressure sensitive adhesive with the antistatic agent to create an antistatic blend. The pressure sensitive adhesive is formed by blending the pressure sensitive adhesive components. In some embodiments, the pressure sensitive adhesive components are further blended with a curing agent. The curing agents include, for example, IRGACURE 651, commercially available from Ciba, Hawthorne, NJ. The pressure sensitive adhesive blend is first degassed in nitrogen and then irradiated, for example with a GE Blacklight lamp F15T8-BL, 15W, (commercially available from General Electric, Schenectady, NY) for about 10 to about 30 seconds, generally about 20 seconds. The resulting pressure sensitive adhesive syrup generally has a viscosity of between about 200 centipoise to 3000 centipoise.

The antistatic agent is loaded into the pressure sensitive adhesive syrup at a weight percentage of at least 5% by weight, generally greater than 10% by weight. The antistatic agent may be loaded into the pressure sensitive adhesive at weight percentages of up to 30% by weight, and in some examples up to 50% by weight, because the organic antistatic agent is compatible in the pressure sensitive adhesive, allowing for high load capability. The antistatic agent and the pressure sensitive adhesive syrup may be blended using any known mechanical means, such as shaking, stirring or mixing. The combination of the pressure sensitive adhesive and the antistatic agent is such that the resulting antistatic pressure sensitive adhesive retains desirable optical properties upon cure.

In solvent-based pressure sensitive adhesives, the pressure sensitive adhesive is coated in an organic solvent and then dried. The solvent-based pressure sensitive adhesive is then optionally cured.

The resulting syrup may be easily coated upon suitable flexible backing materials by conventional coating techniques to produce adhesive coated sheet materials. The flexible backing materials may be any materials conventionally utilized as a tape backing, optical film, release liner or any other flexible material. Typical examples of flexible backing materials employed as conventional tape backing that may be useful for the adhesive compositions include those made of paper, plastic films such as polypropylene, polyethylene, polyurethane, polyvinyl chloride, polyester (e. g., polyethylene terephthalate), cellulose acetate, and ethyl cellulose. Some flexible backing may have coatings, for example a release liner will be coated with a low adhesion backsize component, such as silicone.

Backings may also be prepared of fabric such as woven fabric formed of threads of synthetic or natural materials such as cotton, nylon, rayon, glass, ceramic materials, and the like or nonwoven fabric such as air laid webs of natural or synthetic fibers or blends of these. The backing may also be formed of metal, metallized polymer films, or ceramic sheet materials may take the form of any article conventionally known to be utilized with pressure sensitive adhesive compositions such as labels, tapes, signs, covers, marking indicia, and the like.

The pressure sensitive adhesives of the present invention may he coated by any variety of conventional coating techniques such as roll coating, spray coating, knife coating, die coating and the like. In one embodiment, the pressure sensitive adhesive syrup is coated on to a backing prior to curing, and then cured directly onto the backing. Such an embodiment is especially desirable in embodiments requiring a high degree of cross-linking.

The resulting pressure sensitive adhesive has desirable antistatic properties. Generally, the surface resistivity is less than $1 \times 10^{13}$ Ohms/Square. In some embodiments, the surface resistivity is less than $1 \times 10^{11}$ Ohms/Square. Additionally, the pressure sensitive adhesive has antistatic properties in high temperature and high humidity conditions without resulting in any deterioration in the adhesive itself or in the antistatic properties. The organic salt antistatic agent is generally less receptive to absorbing water than metallic cation salts at high temperature and high humidity. Water absorption into the pressure sensitive adhesive causes bubbling in the adhesive, yellowing and aging of the adhesive and haze. Organic salts absorb less water, and therefore remain stable in a variety of environments. Generally, the surface resistivity at low humidity (23% humidity at 23°C) is within two times of the surface resistivity at high humidity (50% humidity at 20°C).

Additionally, high load weight percentages (as discussed above) are available and stable in antistatic pressure sensitive adhesives of the present invention. Inorganic and metal cation salts may precipitate and crystallize out of the pressure sensitive adhesive matrix in certain conditions. This is especially true for high heat applications, including electronic applications.

The antistatic pressure sensitive adhesive of the present invention exhibits desirable optical properties, for example the adhesive of the invention has a higher luminous transmission and lower haze than a selected substrate. Therefore, a pressure sensitive adhesive article of the present invention will have substantially the same luminous transmission and haze as the backing alone. In other embodiments, the antistatic pressure sensitive adhesive will have a lower opacity than the substrate, for example less than 1%, and in specific embodiments less than 0.6%. In a multiple layered article, each layer generally contributes to a decrease in luminous transmission. The antistatic pressure sensitivc adhesive of the present invention, when added to a multilayered structure, will generally not reduce optical properties further. For example, polyethylene terephthalate has a luminous transmission of greater than 88% and a haze of less than 5%, and an adhesive article with a polyethylene terephthalate backing will also have a luminous transmission of greater than 88% and a haze of less than 5%. In such embodiments, the adhesive will have a luminous transmission of greater than 88%, for example greater than 89%. In certain embodiments, the haze is less than 4%, and in specific embodiments the haze is less than 2%. The opacity of the antistatic pressure sensitive adhesive is generally less than 1 %, specifically less than 0.6%.

The antistatic pressure sensitive adhesive exhibits a 180° peel adhesion from glass of at least 5 N/dm after 1 minute dwell and at least 25 N/dm after a 24 hour dwell time. The shear strength of the resulting antistatic pressure sensitive adhesive is at least 1,000 minutes.

Articles

Many articles will benefit from the present invention. Any surface that generates electrostatic charge, and needs effective antistatic properties at a variety of temperatures and humidity ranges will benefit from the present antistatic pressure sensitive adhesive. Specifically, flat panel displays, such as liquid crystal displays, computer screens, and television screens.

Examples

These examples are merely for illustrative purposes only and are not meant to be limiting on the scope of the appended claims. All parts, percentages, ratios, etc. in the examples and the rest of the specification are by weight unless indicated otherwise.

| Table of Abbreviations | |
|---|---|
| AA | Acrylic acid |
| ALIQUAT 336 | Methyltrioctylammonium chloride, available from Sigma Aldrich, Milwaukee,. WI. |
| Antistatic Agent-A | $[C_8H_{17}\ N^+(CH_3)_2CH_2CH_2OH]\ [^-O_3SCF_3]$ |
| Antistatic Agent B | $[C_8H_{17}N^+(CH_3)_2CH_2CH_2OH]\ [^-N(SO_2CF_3)_2]$ |
| Antistatic Agent C | $[C_{12}H_{25}N^+(CH_3)(CH_2CH_2OH)_2]\ [^-N(SO_2CF_3)_2]$ |
| Antistatic Agent D | $[C_{12}H_{25}N^+(CH_3)\{(CH_2CH_2O)_mH\}\ \{(CH_2CH_2O)_nH\}\ (m+n=15)]\ [^-N(SO_2CF_3)_2]$ |
| Antistatic Agent E | $[C_8H_{17}N^+(CH_3)_2CH_2CH_2OH]\ [^-O_3SCH_3]$ available as Larostat HTS 905, a 95% aqueous solution, from BASF, Gurnee, IL. |
| Antistatic Agent F | $[(CH_3CH_2)_3N^+H]\ [^-N(SO_2CF_3)_2]$ |
| Antistatic Agent G | $[C_{12}H_{25}N^+(CH_3)\ \{(CH_2CH_2O)_mH\}\ \{(CH_2CH_2O)_nH\}\ (m+n=15)]\ [^-O_3SCF_3]$ |
| Antistatic Agent H | $[(CH_3CH_2)_4N^+]\ [^-O_3SCF_3]$ |
| Antistatic Agent I | $[(C_8H_{17})_3N^+(CH_3)]\ [^-O_3SC_4F_9]$ |
| Antistatic Agent J | $[C_8H_{17}N^+(CH_3)_2CH_2CH_2OH]\ [^-O_3SC_4F_9]$ |
| Antistatic Agent K | $[C_{12}H_{25}N^+\{CH_3\}\ \{(CH_2CH_2O)_mH\}\ \{(CH_2CH_2O)_nH\}\ (m+n=15)]\ [^-Cl]$ Available as ETHOQUAD C/25 from Akzo Nobel Surface Chemistry LLC, Chicago, IL |
| Antistatic Agent L | $[C_{18}H_{35}N^+\{CH_3\}\ \{(CH_2CH_2O)_mH\}\ \{(CH_2CH_2O)_nH\}\ (m+n=15)]\ [^-O_3SCF_3]$ |
| Antistatic Agent M | $[C_{18}H_{35}N^+\{CH_3\}\{(CH_2CH_2O)_mH\}\ \{(CH_2CH_2O)_nH\}\ (m+n=15)]\ [^-N(SO_2CF_3)_2]$ |
| Antistatic Agent N | $[n\text{-}C_4H_9\text{-cyc-}N^+C_5H_5]\ [^-N(SO_2CF_3)_2]$ ($n\text{-}C_4H_9\text{-cyc-}N^+C_5H_5$ is N-butylpyridyl) |
| ETHOQUAD 18/25 | $[C_{18}H_{37}N^+(CH_3)\{(CH_2CH_2O)_mH\}\{(CH_2CH_2O)_nH\}\ (m+n=15)]\ [^-Cl]$ ~95% solids in water, available from Akzo Nobel Surface Chemistry LLC, Chicago, IL |
| HQ-115 | $LiN(SO_2CF_3)_2$, available from 3M Company, St. Paul, MN |
| FLUORAD FC 122 | $LiO_3SCF_3$ available from 3M Company, St. Paul, MN |
| ETHOQUAD C/12 | $[C_{12}H_{25}N^+(CH_3)(CH_2CH_2OH)_2]\ [^-Cl]$ available from Akzo Nobel Surface Chemistry LLC, Chicago, IL |
| Glass Microscope Slides | 75 millimeter x 50 millimeter x 1 millimeter Corning No. 2947 Microslides commercially available from Corning Glass Works; Corning, NY |
| IOA | Isooctyl acrylate |
| IRGACURE 651 | Photo curing agent 2,2 dimethoxy-2-phenylacetophenone, available from Ciba; Hawthorne, NJ |

(continued)

| Table of Abbreviations | |
|---|---|
| AA | Acrylic acid |
| PEA | Phenoxy Ethyl Acrylate |
| PET | polyester film of polyethylene terephthalate having a thickness of 50 micrometers |

The antistatic agents were prepared generally as described in U.S. Patent Number 6,372,829 to Lamanna et al., assigned to 3M Innovative Properties Company, unless described differently herein. Some specific preparations are provided below.

**Preparation of Antistatic Agent A: $[C_8H_{17}N^+(CH_3)_2CH_2CH_2OH]$ $[^-O_3SCF_3]$**

Antistatic Agent A was prepared as described in Example 3 of U.S. Patent Number 6,372,829 to Lamanna et al.

**Preparation of Antistatic Agent B: $[C_8H_{17}N^+(CH_3)_2(CH_2CH_2OH)][^-N(SO_2CF_3)_2]$**

Antistatic Agent B was prepared as described in Example 1 of U.S. Patent Number 6,372,829 to Lamanna et al.

**Preparation of Antistatic Agent C: $[C_{12}H_{25}N^+\{CH_3\}(CH_2CH_2OH)_2]$ $[^-N(SO_2CF_3)_2]$**

To 36.38 g (0.127 moles) HQ-115 in 70 mL of water was added to 55.0g (0.127 mole) of a 75% solids solution of ETHOQUAD C/12 (323.5g/mole) in water with stirring. After 2 hours at room temperature (25 °C), the reaction was extracted with 70mL methylene chloride. The methylene chloride layer was washed with 40mL water, and then concentrated under aspirator vacuum at 60-120 °C for 3 hours to yield 70.54g (94.3%) of a viscous clear light brown product.

**Preparation of Antistatic Agent D: $[C_{12}H_{25}N^+(CH_3)(CH_2CH_2O)_mH(CH_2CH_2O)_nH]$ $[^-N(SO_2CF_3)_2]$; (m+n=15)**

A 1 liter flask equipped with a mechanical stirrer was charged with 28.7 grams HQ-115 and 125.0 grams of water. To this stirred solution, 95.89 grams of ETHOQUAD C/25 was added via a dropping funnel, over 16 minutes. The resulting mixture was transferred to a separatory funnel and extracted with 200 grams of methylene chloride. The methylene chloride organic phase was separated from the aqueous phase and washed with 125 mL of water. After washing, the organic phase was placed in a silicone oil bath and distilled at 150°C for a yield of 108.92 grams (94% yield).

**Preparation of Antistatic Agent F: $[(CH_3CH_2)_3N^+H]$ $[^-N(SO_2CF_3)_2]$**

Antistatic Agent F was prepared as described in Example 12 of U.S. Patent Number 5,874,616 to Howells et al.

**Preparation of Antistatic Agent G: $[C_{12}H_{25}N^+(CH_3)(CH_2CH_2O)_mH(CH_2CH_2O)_nH]$ $[^-O_3SCF_3]$; (m+n=15)**

A 1 liter flask equipped with a mechanical stirrer was charged with a 72% aqueous solution of lithium triflate (45.18 grams) and 120.0 mL of water. To this stirred solution, 200.0 grams of ETHOQUAD C/25 was added via a dropping funnel over 7 minutes. The resulting mixture was stirred at room temperature for 1.5 hours, was transferred to a separatory funnel, and methylene chloride (400 milliliters) was added to extract the desired product. The methylene chloride organic phase was washed with water (150 ml). The organic phase was collected into a 1 L round bottom and concentrated at 60°C under aspirator-reduced pressure for 1 hour and then at 110°C under aspirator-reduced pressure for 1 hour to yield 205.2 g (96% yield) of a brown viscous product.

**Preparation of Antistatic Agent H: $[(CH_3CH_2)_4N^+]$ $[^-O_3SCF_3]$**

Antistatic Agent H was prepared as described for Compound 2 of U.S. Patent Number 6,372,829 to Lamanna et al.

**Preparation of Antistatic Agent I: $[(C_8H_{17})_3N^+(CH_3)]\ [^-O_3SC_4F_9]$**

Antistatic Agent I was prepared as described in Example 2 of U.S. Patent Number 6.372,829 to Lamanna et al. with the exception that ALIQUAT 336 was used in place of LAROSTAT HTS 905.

**Preparation of Antistatic Agent J: $[C_8H_{17}N^+(CH_3)_2CH_2CH_2OH]\ [^-O_3SC_4F_9]$**

Antistatic Agent J was prepared as described in Example 2 of U.S. Patent Number 6,372,829 to Lamanna et al.

**Preparation of Antistatic Agent L: $[C_{18}H_{37}N^+(CH_3)(CH_2CH_2O)_mH\ (CH_2CH_2O)_nH]\ [^-O_3SCF_3]$; (m+n=15)**

Antistatic Agent L was prepared in a manner similar to the preparation of Antistatic Agent G except that the 1 liter flask was charged with 13.43 grams of a 72% solids aqueous solution of lithium triflate and 125 grams of water, and 65 grams of ETHOQUAD 18/25 was added over 15 minutes, followed by extraction with 200g methylene chloride. The organic layer produced a yield of 63.77 grams (92.8% yield) of product.

**Preparation of Antistatic Agent M :$[C_{18}H_{37}N^+(CH_3)(CH_2CH_2O)_mH\ (CH_2CH_2O)_nH]\ [^-N(SO_2CF_3)_2]$; (m+n=15)**

Antistatic Agent M was prepared in a manner similar to the preparation of Antistatic Agent G except that the 1 liter flask was charged with 17.79 grams of HQ-115 and 125.0 grams of water and 65 grams of ETHOQUAD 18/25 were added over 15 minutes, followed by extraction with 200 grams methylene chloride. The organic phase produced a yield of 74.44 grams (96.9% yield) of product.

**Preparation of Antistatic Agent N: $[n\text{-}C_4H_9\text{-cyc-}N^+C_5H_5]\ [^-N(SO_2CF_3)_2]$ ($n\text{-}C_4H_9\text{-cyc-}N^+C_5H_5$ is N-butylpyridyl)**

Antistatic Agent N was prepared as described as Compound 9 of U.S. Patent Number 6,372,829 to Lamanna et al.

**Test Methods**

Solubility and Clarity Test

The solubility of candidate Antistatic Agents in the monomer mixtures as well as in the PSA syrups formed from them was tested by mixing the Agents into the monomer or syrup mixtures and checking the formed mixture for optical clarity.

For monomer mixtures, samples were prepared by adding from 0.05 weight fraction of the monomer mixture in a vial to 0.50 weight fraction of the candidate Antistatic Agent (in 0.05 weight fraction increments) to 0.95 weight fraction to 0.50 weight fraction of monomer, respectively, in a vial. The total weight fraction of Antistatic Agent and monomer mixture in all cases was 1.0. The mixture was shaken for 1 minute and observed for optical clarity. The highest weight fraction (up to 0.50) of Antistatic Agent that provided a clear mixture in the monomers was determined and is recorded.

Similarly, for syrup mixtures, samples were prepared by adding from 0.05 weight fraction to 0.50 weight fraction of the candidate Antistatic Agent ( in 0.05 weight fraction steps) to 0.95 to 0.50 weight fraction of syrup, respectively, in a vial. The total weight fraction of Antistatic Agent and syrup in all cases was 1.0. The mixture was shaken for 1 minute and observed for optical clarity. The highest weight fraction (up to 0.50) of Antistatic Agent that provided a clear mixture in the syrup was determined and is recorded.

Luminous Transmittance and Haze

The luminous transmittance and haze of all samples were measured according to American Society for Testing and Measurement (ASTM) Test Method D 1003-95 ("Standard Test for Haze and Luminous Transmittance of Transparent Plastic") using a TCS Plus Spectrophotometer from BYK-Gardner Inc.; Silver Springs, MD. Sample preparation details are described in the text. Desired optical property values: luminous transmittance >88.8% (88.8% is the value for the PET backing); haze <2%.

Opacity Measurement

The same samples used for haze and luminous transmittance measurements were used for opacity measurement. The BYK Gardner TCS Plus Spectrophotometer was used for opacity measurement, with the standard size reflectance port (25 mm) installed, and diffuse reflectance (specular excluded) was measured. Desired optical property value is opacity <1%.

Surface Resistivity Measurement

The surface resistivity of coatings of the invention was measured as follows:

Examples 12, 14, 18, 20,24, 33, 34, and comparative Examples C1, C2, C7 and C8 were measured using a Keithley 237 Digital Electrometer/High Resistance Meter connected to a Keithley 8008 Resistivity Test Fixture (Keithley Instruments, Cleveland, OH) with a test voltage of 500 volts.
Examples 13 and 15 were measured using a Keithley 6517A Digital Electrometer/High Resistance Meter connected to a Keithley 8009 Resistivity Test Fixture with a test voltage of 500 volts.
Examples 25-32 were measured using an ETS Model 872 Wide Range Resistance Meter fitted with a Model 803B probe (Electro-Tech Systems, Inc., Glenside, PA) with a test voltage of 100 volts. Individual samples were measured using standard procedures according to ASTM D-257. The temperature and relative humidity (RH) conditions are noted for each test.

180° Peel Adhesion

This peel adhesion test is similar to the test method described in ASTM D 3330-90, substituting a glass substrate for the stainless steel substrate described in the test.
Adhesive coatings on polyester film were cut into 1.27 centimeter by 15 centimeter strips. Each strip was then adhered to a 10 centimeter by 20 centimeter clean, solvent washed glass coupon using a 2-kilogram roller passed once over the strip. The bonded assembly dwelled at room temperature for about one minute and was tested for 180° peel adhesion using an IMASS slip/peel tester (Model 3M90, commercially available from Instrumentors Inc., Strongsville, OH) at a rate of 0.3 meters/minute (12 inches/minute) over a five second data collection time. Two samples were tested; the reported peel adhesion value is an average of the peel adhesion value from each of the two samples. Additionally, samples were allowed to dwell at constant temperature and humidity conditions for 24 hours and then were tested for 180° peel adhesion.

Shear Strength

This shear strength test is similar to the test method described in ASTM D 3654-88.
Adhesive coatings on polyester film were cut into 1.27 centimeter (0.5 inch) by 15 centimeter (6 inch) strips. Each strip was then adhered to a stainless steel panel such that a 1.27 centimeter by 1.27 centimeter portion of each strip was in firm contact with the panel and one end portion of the tape being free. The panel with coated strip attached was held in a rack such that the panel formed an angle of 178° with the extended tape free end, which was tensioned by application of a force of one kilogram applied as a hanging weight from the free end of the coated strip. The 2° less than 180° was used to negate any peel forces, thus ensuring that only shear strength forces were measured, in an attempt to more accurately determine the holding power of the tape being tested. The time elapsed for each tape example to separate from the test panel was recorded as the shear strength. All shear strength failures (if the adhesive failed at less than 10,000 minutes) reported herein were adhesive failures (i.e. no adhesive residue was left on the panel) unless otherwise noted. Each test was terminated at 10,000 minutes, unless the adhesive failed at an earlier time (as noted).

Probe Tack Test

Probe tack measurements were made following the test method described in ASTM D 2979-95 using a POLYKEN probe tack tester, Series 400 (commercially available from Testing Machines Inc; Amityville, New York). The probe tack value is an average often readings per sample.

Reference Optical Properties

The optical properties of the substrates PET and Glass Microscope Slides were tested for luminous transmittance, haze and opacity as a reference point for when these substrates are used in laminates. These values are shown in Table A.

Table A

| Substrate | Luminous Transmittance (%) | Haze (%) | | Opacity (%) | |
|---|---|---|---|---|---|
| | | C2° | A2° | C2° | A2° |
| PET | 88.8 | 0.8 | 0.8 | 0.5 | 0.5 |
| Glass Microscope Slide | 92.4 | 0.1 | 0.1 | 0.2 | 0.2 |

PSA Syrup preparation

PSA Syrup A

The syrup composition has a ratio of monomers of IOA/AA of 90/10. A mixture of 9 parts of IOA, 1 part of AA and 0.012 part of IRGACURE 651 were mixed in a glass vessel. After nitrogen de-gas, the mixture was irradiated with a GE Blacklight lamp F15T8-BL, 15W, (commercially available from General Electric, Schenectady, NY) for about 20 seconds, so that the resulting syrup had a viscosity of about 200 centipoise to 3000 centipoise.

PSA Syrup B

The syrup composition was prepared using the same procedure as PSA Syrup A with a ratio of monomers of PEA/IOA of 70/30.

PSA Syrup C

The syrup composition was prepared using the same procedure as PSA Syrup A with a ratio of monomers of PEA/IOA/AA of 70/25/5.

Comparative Example C1

To the PSA Syrup A was added IRGACURE 651 (in a ratio of 50 milligrams of IRGACURE 651 to 20 grams of syrup) and the resulting mixture was cast between a PET film and a silicone coated release liner with a knife coater at a dry coating thickness of 50 micrometers and photocured under GE Blacklight lamp F40BL, 40W, (commercially available from General Electric, Schenectady, NY) for 3 minutes. The release liner was removed to form a tape and the exposed PSA surface was tested for surface resistivity. These data are shown in Table 7. Samples were tested for probe tack, peel and shear strength, the data are shown in Tables 5 and 6.

Comparative Example C2

To the PSA Syrup B was added IRGACURE 651 (in a ratio of 50 milligrams of IRGACURE 651 to 20 grams of syrup) and the resulting mixture was cast between a PET film and a silicone coated release liner with a knife coater at a dry coating thickness of 50 micrometers and photocured under GE Blacklight lamp F40BL, 40W, (commercially available from General Electric, Schenectady, NY) for 3 minutes. The release liner was removed to form a tape and the exposed PSA surface was tested for surface resistivity. These data are shown in Table 7.

Examples 1-10 and Comparative Examples C3-C6

The Solubility and Clarity Test method described above was used to test a PSA monomer mixture containing 9 parts of IOA and 1 part of AA and PSA Syrup A with candidate Antistatic Agents. The identity and amount of Antistatic Agent used, and the results of Solubility and Clarity tests are shown in Table 1.

Table 1

| Example | Antistatic Agent | Monomer Test (Weight % of Antistatic Agent) | Syrup Test (Weight % of Antistatic Agent) |
|---|---|---|---|
| I | A | 40 | 20 |

Table 1 (continued)

| Example | Antistatic Agent | Monomer Test (Weight % of Antistatic Agent) | Syrup Test (Weight % of Antistatic Agent) |
|---|---|---|---|
| 2 | B | 40 | 35 |
| 3 | C | 50 | 50 |
| 4 | D | 40 | 20 |
| C3 | E | 0 | 0 |
| 5 | F | 40 | 20 |
| C4 | G | 0 | 0 |
| 6 | H | 5 | 5 |
| 7 | I | 20 | 25 |
| C5 | J | 0 | 0 |
| C6 | K | 0 | 0 |
| 8 | L | 50 | 50 |
| 9 | M | 40 | 30 |
| 10 | N | 15 | 40 |

Examples 11-32 and Comparative Examples C7-C8

The PSA Syrup A was mixed with an Antistatic Agent, the identity and amount of Antistatic Agent used is shown in Table 2. To this clear mixture was added IRGACURE 651 (in a ratio of 50 milligrams of IRGACURE 651 to 20 grams of syrup) and the resulting mixture was cast between a PET film and a silicone coated release liner with a knife coater at a dry coating thickness of 50 micrometers and photocured under GE Blacklight lamp F40BL, 40W, (commercially available from General Electric, Schenectady, NY) for 3 minutes. The release liner was removed to form a tape and for some samples, the exposed PSA surface was tested for surface resistivity. These data are shown in Table 3. The tape was then laminated to a Glass Microscope Slide and a hand-held rubber roller was used to apply pressure on the PET film side, to form a PET/PSA/Glass laminate. This laminate was then tested for luminous transmittance, haze and opacity. These data are shown in Table 4. Some samples were tested for probe tack, peel and shear strength, the data are shown in Tables 5 and 6.

Table 2

| Example | Antistatic Agent Identity | Antistatic Agent Loading (weight %) |
|---|---|---|
| 11 | A | 5 |
| 12 | A | 10 |
| 13 | B | 5 |
| 14 | B | 10 |
| C7 | B | 15 |
| C8 | B | 20 |
| 15 | C | 5 |
| 16 | C | 10 |
| 17 | C | 15 |
| 18 | C | 20 |
| 19 | D | 5 |
| 20 | D | 10 |
| 21 | D | 15 |

Table 2 (continued)

| Example | Antistatic Agent Identity | Antistatic Agent Loading (weight %) |
|---|---|---|
| 22 | D | 20 |
| 23 | C | 25 |
| 24 | C | 30 |
| 25 | C | 40 |
| 26 | C | 45 |
| 27 | C | 50 |
| 28 | L | 30 |
| 29 | L | 40 |
| 30 | L | 45 |
| 31 | M | 20 |
| 32 | M | 30 |

Table 3

| Example | Antistatic Agent Loading (weight %) | Surface Resistivity (Ohms/ Square) 20°C/50%RH | Surface Resistivity (Ohms/ Square) 22°C/28%RH (except if otherwise noted) |
|---|---|---|---|
| 12 | 10 | $1.87 \times 10^{10}$ | Not tested |
| 13 | 5 | $1.50 \times 10^{10}$ | Not tested |
| 14 | 10 | $3.44 \times 10^{9}$ | Not tested |
| 15 | 5 | $1.47 \times 10^{10}$ | Not tested |
| 18 | 20 | $9.10 \times 10^{8}$ | Not tested |
| 20 | 10 | $1.66 \times 10^{10}$ | Not tested |
| 24 | 30 | $1.80 \times 10^{8}$ | $2.92 \times 10^{8}$23°C/23%RH |
| 25 | 40 | Not tested | $4.80 \times 10^{7}$ |
| 26 | 45 | Not tested | $2.20 \times 10^{7}$ |
| 27 | 50 | Not tested | $1.60 \times 10^{7}$ |
| 28 | 30 | Not tested | $5.90 \times 10^{7}$ |
| 29 | 40 | Not tested | $2.00 \times 10^{7}$ |
| 30 | 45 | Not tested | $1.10 \times 10^{7}$ |
| 31 | 20 | Not tested | $4.80 \times 10^{8}$ |
| 32 | 30 | Not tested | $1.10 \times 10^{7}$ |

Table 4

| Example | Luminous Transmittance (%) | Haze (%) | | Opacity (%) | |
|---|---|---|---|---|---|
| | | C2° | A2° | C2° | A2° |
| 11 | 90.0 | 1.6 | 1.5 | 0.4 | 0.4 |
| 12 | 89.9 | 1.8 | 1.8 | 0.5 | 0.5 |
| 13 | 89.4 | 2.2 | 2.1 | 0.8 | 0.7 |

Table 4 (continued)

| Example | Luminous Transmittance (%) | Haze (%) | | Opacity (%) | |
|---|---|---|---|---|---|
| | | C2° | A2° | C2° | A2° |
| 14 | 89.3 | 2.4 | 2.3 | 0.8 | 0.8 |
| C7 | 88.3 | 12.4 | 11.5 | 1.6 | 1.5 |
| C8 | 85.7 | 47.0 | 44.3 | 3.8 | 3.7 |
| 15 | 90.0 | 1.6 | 1.6 | 0.4 | 0.4 |
| 16 | 90.0 | 1.4 | 1.3 | 0.4 | 0.4 |
| 17 | 90.0 | 1.8 | 1.7 | 0.5 | 0.5 |
| 18 | 90.0 | 1.7 | 1.7 | 0.4 | 0.4 |
| 19 | 89.9 | 2.0 | 2.0 | 0.4 | 0.4 |
| 20 | 89.8 | 3.7 | 3.5 | 0.5 | 0.5 |
| 23 | 89.8 | 2.4 | 2.4 | 0.6 | 0.6 |
| 24 | 89.8 | 1.8 | 1.7 | 0.4 | 0.4 |
| 25 | 88.8 | 2.5 | 2.4 | 0.9 | 0.9 |
| 26 | 88.7 | 2.5 | 2.4 | 0.9 | 0.8 |
| 27 | 88.8 | 2.4 | 2.3 | 0.9 | 0.8 |
| 28 | 88.8 | 2.8 | 2.7 | 0.9 | 0.9 |
| 29 | 88.4 | 3.8 | 3.6 | 0.9 | 0.9 |
| 30 | 88.5 | 3.7 | 3.6 | 0.9 | 0.9 |
| 31 | 88.7 | 3.1 | 3.0 | 0.9 | 0.9 |
| 32 | 88.5 | 3.6 | 3.5 | 0.9 | 0.9 |

Table 5

| Example | Antistatic Agent C Loading (weight %) | 180° Peel Adhesion after 1 minute dwell (N/dm) | 180° Peel Adhesion after 24 hr. dwell (N/dm) |
|---|---|---|---|
| C1 | 0 | 47.7 | 57.8 |
| 14 | to | 17.3 | 30.9 |
| 16 | 20 | 14.2 | 27.8 |
| 22 | 30 | 7.4 | 28.7 |

Table 6

| Example | Antistatic Agent C Loading (weight %) | Probe Tack (grams) | Shear Strength (minutes) |
|---|---|---|---|
| C1 | 0 | 354 | 10,000 |
| 14 | 10 | 267 | 5,630 |
| 16 | 20 | 557 | 1,734 |
| 22 | 30 | 664 | 1,078 |

Example 33

The PSA Syrup B was mixed with Antistatic Agent C in an amount shown in Table 7. To this clear mixture was

added IRGACURE 651 (in a ratio of 50 milligrams of IRGACURE 651 to 20 grams of syrup) and the resulting mixture was cast between a PET film and a silicone coated release liner with a knife coater at a dry coating thickness of 50 micrometers and photocured under GE Blacklight lamp F40BL, 40W, (commercially available from General Electric, Schenectady, NY) for 3 minutes. The release liner was removed to form a tape and the exposed PSA surface was tested for surface resistivity. These data are shown in Table 7.

Example 34

The PSA Syrup C was mixed with Antistatic Agent C in an amount shown in Table 7. To this clear mixture was added IRGACURE 651 (in a ratio of 50 milligrams of IRGACURE 651 to 20 grams of syrup) and the resulting mixture was cast between a PET film (50 microns thick) and a silicone coated release liner with a knife coater at a dry coating thickness of 50 micrometers and photocured under GE Blacklight lamp F40BL, 40W, (commercially available from General Electric, Schenectady, NY) for 3 minutes. The release liner was removed to form a tape and the exposed PSA surface was tested for surface resistivity. These data are shown in Table 7.

Table 7

| Example | Antistatic Agent C Loading (weight %) | Surface Resistivity (Ohms/Square) 20°C/62%RH |
|---|---|---|
| 33 | 30 | $4.45 \times 10^{8}$ |
| 34 | 30 | $1.28 \times 10^{9}$ |
| C1 | 0 | $8.23 \times 10^{14}$ |
| C2 | 0 | $7.92 \times 10^{14}$ |

Various modifications and alterations of the present invention will become apparent to those skilled in the art without departing from the spirit and scope of the invention.

## Claims

**1.** An antistatic pressure sensitive adhesive comprising

(a) a pressure sensitive adhesive; and
(b) an antistatic agent comprising at least one organic salt wherein the organic salt comprises a cation comprising an organic substituent and a fluoroorganic anion,

wherein the organic salt is present in at least 10% by weight of the antistatic pressure sensitive adhesive..

**2.** An antistatic pressure sensitive adhesive comprising

(a) a pressure sensitive adhesive; and
(b) an antistatic agent comprising at least one organic salt wherein the organic salt comprises a cation comprising an organic substituent and a fluoroorganic anion,

wherein the antistatic pressure sensitive adhesive has a luminous transmission of greater than about 89% according to ASTM D 1003-95.

**3.** The antistatic pressure sensitive adhesive of claim 2 wherein the adhesive has a haze of less than about 5% according to ASTM D 1003-95.

**4.** The antistatic pressure sensitive adhesive of claim 2 wherein the organic salt is present in at least about 30 % by weight of the antistatic pressure sensitive adhesive.

**5.** The antistatic pressure sensitive adhesive of claim 2 wherein the antistatic agent is a compound represented by the formula

$$(R_1)_{t-v}G^+[(CH_2)_qOR_2]_v X^-$$

wherein
$R_1$ comprises alkyl, alicyclic, aryl, alkalicyclic, alkaryl, alicyclicalkyl, aralkyl, aralicyclic, or alicyclicaryl moieties,
$R_2$ comprises hydrogen or alkyl, alicyclic, aryl, alkalicyclic, alkaryl, alicyclicalkyl, aralkyl, aralicyclic, or alicyclicaryl moieties,
G is nitrogen, sulfur or phosphorous;
if G is sulfur then t is 3, if G is nitrogen or phosphorous then t is 4,
if G is sulfur then v is an integer of 1 to 3, if G is nitrogen or phosphorous the v is an integer of to 4,
q is an integer of 1 to 4, and
X is a weakly coordinating fluoroorganic anion.

**6.** The antistatic pressure sensitive adhesive of claim 2 wherein the antistatic agent comprises octyldimethyl-2-hydroxyethylammonium trifluoromethanesulfonate; octyldimethyl-2-hydroxyethylammonium bis(trifluoromethylsulfonyl)imide; dodecylmethyl-bis(2-hydroxyethyl)ammonium bis(trifluoromethylsulfonyl)imide; or combinations thereof.

**7.** The antistatic pressure sensitive adhesive of claim 2 wherein the antistatic agent comprises dodecyl-methyl-bis-poly(ethylene oxide)ammonium bis[(trifluoromethyl)sulfonyl]imide; $[C_{18}H_{37}N^+(CH_3)(CH_2CH_2O)_mH\ (CH_2CH_2O)_nH]$ $[^-O_3SCF_3]$, where m+n=15; $[C_{18}H_{37}N^+(CH_3)(CH_2CH_2O)_mH\ (CH_2CH_2O)_nH][^-N(SO_2CF_3)_2]$, where m+n=15; $[n\text{-}C_4H_9\text{-cyc-}N^+C_5H_5][N(SO_2\ CF_3)_2]$; or mixtures thereof.

**8.** The antistatic pressure sensitive adhesive of claim 2 wherein the antistatic agent has a cation and a weakly coordinating fluoroorganic anion, and the cation is a compound represented by one of the following formulae:

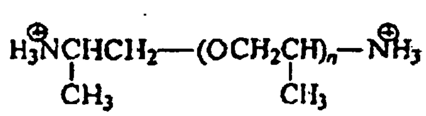

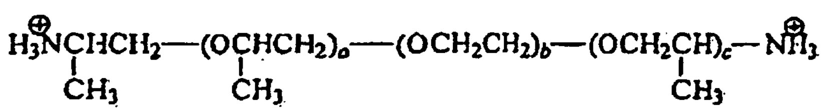

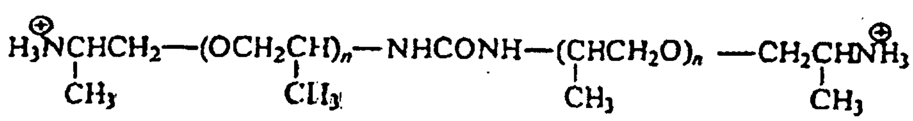

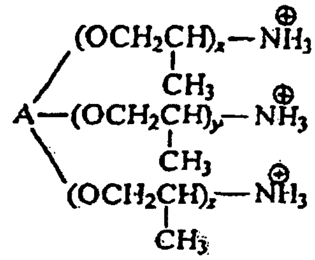

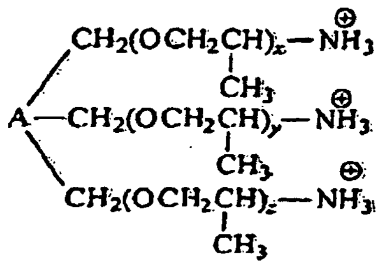

$$^{+}N[(R_4)_{4-d}][(POA)R_5]_d$$

wherein,
n is an integer of 3 to 50,
b is an integer of 5 to 150,
a is an integer from 0 to 5,
c is an integer from 0 to 5, where a+c is un integer from 2 to 5,
A is a CH≡ ,$CH_3C$ ≡, $CH_3CH_2C$≡, or a -$CH_2$-CH-$CH_2$- group;
x, y and z, equal or different, are integers of 1 to 30 such that the sum of $x + y + z \geq 5$,
POA is either a homopolymer or a copolymer that is random, blocked, or
alternating, and POA comprises 2 to 50 units represented by the formula $((CH_2)_mCH(R_3)O)$ where m is independently an integer from 1 to 4,
$R_3$ is independently hydrogen or a lower alkyl group comprising 1 to 4 carbon atoms,
$R_4$ is independently an alkyl, an alicyclic, an aryl, an alkalicyclic, an arylalicyclic, or an alicyclicaryl group;
$R_5$ is independently hydrogen, an alkyl, an alicyclic, an aryl, an alkalicyclic, an arylalicyclic, or an alicyclicaryl group, and
d is an integer from 1 to 4.

**9.** The antistatic pressure sensitive adhesive of claim 2 wherein the antistatic agent comprises a cation and a weakly coordinating fluoroorganic anion, and the weakly coordinating fluoroorganic anion is a compound represented by one of the following formulae:

$$R_6SO_3^{\ominus}$$

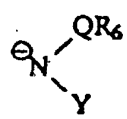

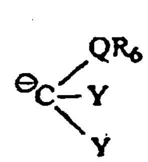

wherein
$R_6$ is independently a fluorinated alkyl or aryl group that may be cyclic or acyclic, saturated or unsaturated,
Q is independently an $SO_2$ or a CO linking group, and
Y is $QR_6$, CN, halogen, H, alkyl, aryl, Q-alkyl, or Q-aryl.

**10.** An antistatic pressure sensitive adhesive comprising

(a) a pressure sensitive adhesive; and
(b) an antistatic agent comprising at least one organic salt wherein the organic salt comprises a cation comprising an organic substituent and a fluoroorganic anion,

wherein the adhesive has a haze of less than about 5% according to ASTM D 1003-95.

**11.** An antistatic pressure sensitive adhesive comprising

(a) a pressure sensitive adhesive; and
(b) an antistatic agent comprising at least one organic salt wherein the organic salt comprises a cation comprising an organic substituent and a fluoroorganic anion,

wherein the adhesive has an opacity of less than 1%.

**Patentansprüche**

**1.** Antistatisches Haftklebemittel, umfassend

(a) ein Haftklebemittel; und
(b) ein antistatisches Mittel, umfassend mindestens ein organisches Salz, wobei das organische Salz ein Kation, welches einen organischen Substituenten umfasst, und ein fluororganisches Anion umfasst,

wobei das organische Salz in mindestens 10 Gew.-% des antistatischen Haftklebemittels vorhanden ist.

**2.** Antistatisches Haftklebemittel, umfassend

(a) ein Haftklebemittel; und
(b) ein antistatisches Mittel, umfassend mindestens ein organisches Salz, wobei das organische Salz ein Kation, welches einen organischen Substituenten umfasst, und ein fluororganisches Anion umfasst,

wobei das antistatische Haftklebemittel eine Lichttransmission von größer als etwa 89% gemäß ASTM D 1003-95 aufweist.

**3.** Antistatisches Haftklebemittel gemäß Anspruch 2, wobei das Klebemittel eine Trübung von weniger als etwa 5% gemäß ASTM D 1003-95 aufweist.

**4.** Antistatisches Haftklebemittel gemäß Anspruch 2, wobei das organische Salz in mindestens etwa 30 Gew.-% des antistatischen Haftklebemittels vorhanden ist.

**5.** Antistatisches Haftklebemittel gemäß Anspruch 2, wobei das antistatische Mittel eine Verbindung ist, dargestellt durch die Formel

$$(R_1)_{t-v}\ G^+\ [(CH_2)_qOR_2]_v\ X^-$$

wobei
$R_1$ Alkyl-, alicyclische, Aryl-, alkalicyclische, Alkaryl-, Alicyclusalkyl-, Aralkyl-, aralicyclische oder Alicyclusaryl-Komponenten umfasst,
$R_2$ Wasserstoff oder Alkyl-, alicyclische, Aryl-, alkalicyclische, Alkaryl-, Alicyclusalkyl-, Aralkyl-, aralicyclische oder Alicyclusaryl-Komponenten umfasst,
G Stickstoff, Schwefel oder Phosphor ist,
wenn G Schwefel ist, t dann 3 ist, wenn G Stickstoff oder Phosphor ist, t dann 4 ist,
wenn G Schwefel ist, v dann eine ganze Zahl von 1 bis 3 ist, wenn G Stickstoff oder Phosphor ist, v dann eine ganze Zahl von 1 bis 4 ist,
q eine ganze Zahl von 1 bis 4 ist, und
X ein schwach koordinierendes fluororganisches Anion ist.

**6.** Antistatisches Haftklebemittel gemäß Anspruch 2,
wobei das antistatische Mittel Octyldimethyl-2-hydroxyethylammonium-trifluormethansulfonat;

Octyldimethyl-2-hydroxyethylammoniumbis(trifluormethylsulfonyl)imid; Dodecylmethylbis(2-hydroxyethyl)ammoniumbis(trifluormethylsulfonyl)imid; oder Kombinationen davon umfasst.

7. Antistatisches Haftklebemittel gemäß Anspruch 2, wobei das antistatische Mittel Dodecylmethyl-bispoly(ethylenoxid)ammoniumbis[(trifluormethyl)sulfonyl]imid; $[C_{18}H_{37}N^{+}(CH_3)\ (CH_2CH_2O)_mH(CH_2CH_2O)_nH]\ [^{-}O_3SCF_3]$, wobei m+n=15; $[\ C_{18}H_{37}N^{+}\ (CH_3)\ (CH_2CH_2O)_mH(CH_2CH_2O)_nH]\ [^{-}N\ (SO_2CF_3)_2]$ , wobei m+n=15; $[n\text{-}C_4H_9\text{-}cYc\text{-}N^{+}C_5H_5\ ]\ [^{-}N(SO_2CF_3\ )_2]$; oder Gemische davon umfasst.

8. Antistatisches Haftklebemittel gemäß Anspruch 2, wobei das antistatische Mittel ein Kation und ein schwach koordinierendes fluororganisches Anion aufweist und das Kation eine Verbindung ist, die durch eine der folgenden Formeln dargestellt ist:

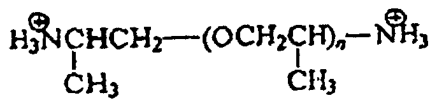

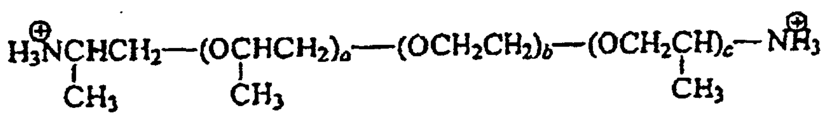

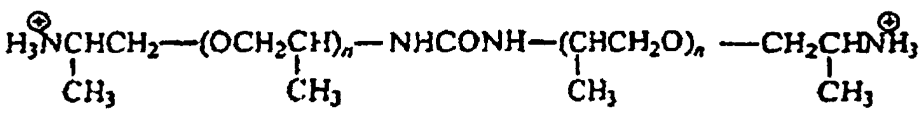

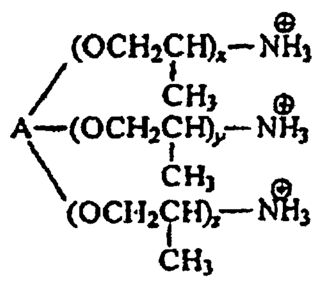

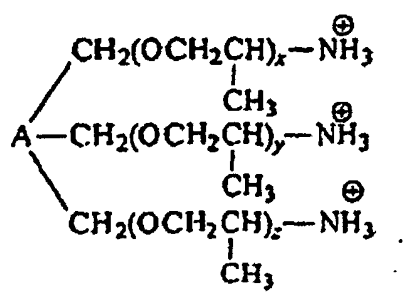

$$^{+}N[(R_4)_{4-d}][(POA)R_5]_d$$

wobei

n eine ganze Zahl von 3 bis 50 ist,
b eine ganze Zahl von 5 bis 150 ist,
a eine ganze Zahl von 0 bis 5 ist,
c eine ganze Zahl von 0 bis 5 ist, wobei a+c eine ganze Zahl von 2 bis 5 ist;
A eine CH≡, $CH_3C$≡, $CH_3CH_2C$≡, oder eine -$CH_2$-CH-$CH_2$-Gruppe ist,
x, y und z, gleich oder verschieden, ganze Zahlen von 1 bis 30 sind, so dass die Summe von $x+y+z \geq 5$ ist,
POA entweder ein Homopolymer oder ein Copolymer ist, welches statistisch, blockartig oder alternierend ist, und POA 2 bis 50 Einheiten umfasst, die durch die Formel ( $(CH_2)_mCH(R_3)O$) dargestellt sind, wobei m unabhängig eine ganze Zahl von 1 bis 4 ist, $R_3$ unabhängig Wasserstoff oder eine Niederalkylgruppe, umfassend 1 bis 4 Kohlenstoffatome,ist,
$R_4$ unabhängig eine Alkyl-, eine alicyclische, eine Aryl-, eine alkalicyclische, eine arylalicyclische oder eine Alicyclusarylgruppe ist,
$R_5$ unabhängig Wasserstoff, eine Alkyl-, eine alicyclische, eine Aryl-, eine alkalicyclische, eine arylalicyclische oder eine Alicyclusarylgruppe ist, und
d eine ganze Zahl von 1 bis 4 ist.

**9.** Antistatisches Haftklebemittel gemäß Anspruch 2, wobei das antistatische Mittel ein Kation und ein schwach koordinierendes fluororganisches Anion umfasst, und das schwach koordinierende fluororganische Anion eine Verbindung ist, die durch eine der folgenden Formeln dargestellt ist:

$$R_6SO_3^{\ominus}$$

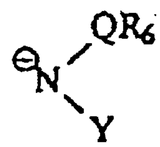

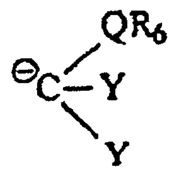

wobei
$R_6$ unabhängig eine fluorierte Alkyl- oder Arylgruppe ist, die cyclisch oder acyclisch, gesättigt oder ungesättigt sein kann,
Q unabhängig eine $SO_2$- oder eine CO-Verbindungsgruppe ist, und
Y $QR_6$, CN, Halogen, H, Alkyl, Aryl, Q-Alkyl oder Q-Aryl ist.

**10.** Antistatisches Haftklebemittel, umfassend

(a) ein Haftklebemittel; und
(b) ein antistatisches Mittel, umfassend mindestens ein organisches Salz, wobei das organische Salz ein Kation, welches einen organischen Substituenten umfasst, und ein fluororganisches Anion umfasst,

wobei das Klebemittel eine Trübung von weniger als etwa 5% gemäß ASTM D 1003-95 aufweist.

**11.** Antistatisches Haftklebemittel, umfassend

(a) ein Haftklebemittel; und
(b) ein antistatisches Mittel, umfassend mindestens ein organisches Salz, wobei das organische Salz ein Kation, welches einen organischen Substituenten umfasst, und ein fluororganisches Anion umfasst,

wobei das Klebemittel eine Opazität von weniger als 1% aufweist.

## Revendications

**1.** Adhésif autocollant antistatique, comprenant :

(a) un adhésif autocollant ; et
(b) un agent antistatique comprenant au moins un sel organique dans lequel le sel organique comprend un cation comprenant un substituant organique et un anion fluoro-organique,

dans lequel le sel organique est présent dans un pourcentage pondéral représentant 10 % au moins de l'adhésif autocollant antistatique.

**2.** Adhésif autocollant antistatique, comprenant :

(a) un adhésif autocollant ; et
(b) un agent antistatique comprenant au moins un sel organique dans lequel le sel organique comprend un cation comprenant un substituant organique et un anion fluoro-organique,

dans lequel l'adhésif autocollant antistatique présente une transmission de la lumière supérieure à environ 89 % selon ASTM D 1003-95.

**3.** Adhésif autocollant antistatique selon la revendication 2, dans lequel l'adhésif a un voile inférieur à environ 5 % selon ASTM D 1003-95.

**4.** Adhésif autocollant antistatique selon la revendication 2, dans lequel le sel organique est présent dans un pourcentage pondéral représentant environ 30 % au moins de l'adhésif autocollant antistatique.

**5.** Adhésif autocollant antistatique selon la revendication 2, dans lequel l'agent antistatique est un composé représenté par la formule

$$(R_1)_{t-v}G^+[(CH_2)_qOR_2]_vX^-$$

dans laquelle
$R_1$ comprend des fractions alkyle, alicycliques, aryle, alkalicycliques, alkaryle, alicycliques-alkyle, aralkyle, aralicycliques, ou alicycliques-aryle,
$R_2$ comprend l'hydrogène ou des fractions alkyle, alicycliques, aryle, alkalicycliques, alkaryle, alicycliques-alkyle, aralkyle, aralicycliques, ou alicycliques-aryle,
G est l'azote, le soufre ou le phosphore,
si G est le soufre alors t vaut 3, si G est l'azote ou le phosphore alors t vaut 4,
si G est le soufre alors v est un nombre entier entre 1 et 3, si G est l'azote ou le phosphore alors v est un nombre entier entre 1 et 4,
q est un nombre entier entre 1 et 4, et
X est un anion de coordination faible fluoro-organique.

**6.** Adhésif autocollant antistatique selon la revendication 2, dans lequel l'agent antistatique comprend le trifluorométhanesulfonate d'octyldiméthyl-2-hydroxyéthylammonium ; l'octyldiméthyl-2-hydroxyéthylammonium bis(trifluorométhylsulfonyl)imide ; le dodécylméthyl-bis(2-hydroxyéthyl)ammonium bis(trifluorométhylsulfonyl)imide ; ou des combinaisons de ceux-ci.

**7.** Adhésif autocollant antistatique selon la revendication 2, dans lequel l'agent antistatique comprend le dodécylméthyl-bis-poly(oxyde d'éthylène)-ammonium bis[(trifluorométhyl)sulfonyl]imide ; $[C_{18}H_{37}N^+(CH_3)(CH_2CH_2O)_mH(CH_2CH_2O)_nH]\ [^-O_3SCF_3]$, où m+n = 15 ; $[C_{18}H_{37}N^+(CH_3)(CH_2CH_2O)_mH(CH_2CH_2O)_nH]\ [-N(SO_2CF_3)_2]$, où m+n = 15 ; $[n\text{-}C_4H_9\text{-cyc-}N^+C_5H_5]\ [^-N(SO_2CF_3)_2]$ ; ou des mélanges de ceux-ci.

**8.** Adhésif autocollant antistatique selon la revendication 2, dans lequel l'agent antistatique comporte un cation et un

anion de coordination faible fluoro-organique, et le cation est un composé représenté par l'une des formules suivantes :

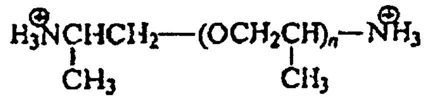

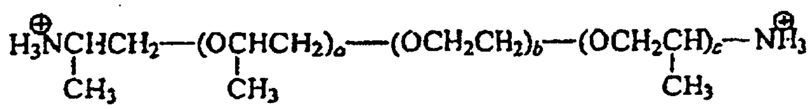

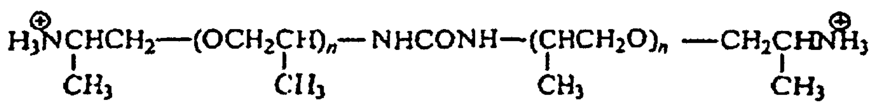

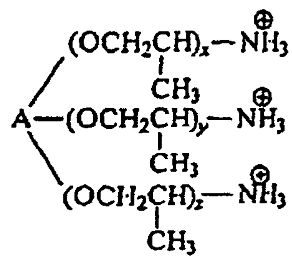

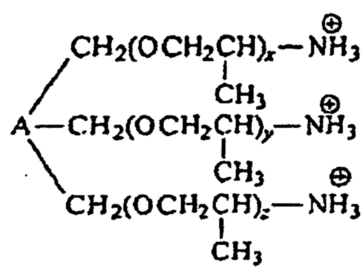

$$^{+}N[(R_4)_{4-d}[(POA)R_5]_d$$

dans laquelle
n est un nombre entier entre 3 et 50,
b est un nombre entier entre 5 et 150,
a est un nombre entier entre 0 et 5,
c est un nombre entier entre 0 et 5, où a+c est un nombre entier entre 2 et 5,
A est un groupe CH≡, $CH_3C$≡, $CH_3CH_2C$≡, ou $-CH_2-CH-CH_2-$,
x, y et z, égaux ou différents, sont des nombres entiers entre 1 et 30 de sorte que la somme de x+y+z soit ≥ 5,
POA est soit un homopolymère soit un copolymère qui est aléatoire, bloqué ou alterné, et POA comprend entre 2 et 50 unités représentées par la formule $((CH_2)_mCH(R_3)O)$ où m est indépendamment un nombre entier entre 1 et 4,
$R_3$ est indépendamment l'hydrogène ou un groupe alkyle inférieur comprenant entre 1 et 4 atomes de carbone,

$R_4$ est indépendamment un groupe alkyle, alicyclique, aryle, alkalicyclique, arylalicyclique, ou alicyclique-aryle,
$R_5$ est indépendamment l'hydrogène ou un groupe alkyle, alicyclique, aryle, alkalicyclique, arylalicyclique, ou alicyclique-aryle, et
d est un nombre entier entre 1 et 4.

**9.** Adhésif autocollant antistatique selon la revendication 2, dans lequel l'agent antistatique comprend un cation et un anion de coordination faible fluoro-organique, et l'anion de coordination faible fluoro-organique est un composé représenté par l'une des formules suivantes :

$$R_6SO_3^{\ominus}$$

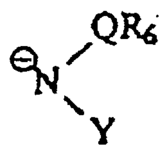

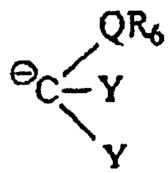

dans laquelle
$R_6$ est indépendamment un groupe alkyle ou aryle fluoré qui peut être cyclique ou acyclique, saturé ou insaturé,
Q est indépendamment un groupe $SO_2$ ou un groupe de liaison CO, et
Y est $QR_6$, CN, un halogène, H, ou un groupe alkyle, aryle, Q-alkyle, ou Q-aryle.

**10.** Adhésif autocollant antistatique, comprenant :

(a) un adhésif autocollant ; et
(b) un agent antistatique comprenant au moins un sel organique dans lequel le sel organique comprend un cation comprenant un substituant organique et un anion fluoro-organique,

dans lequel l'adhésif a un voile inférieur à environ 5 % selon ASTM D 1003-95.

**11.** Adhésif autocollant antistatique, comprenant :

(a) un adhésif autocollant ; et
(b) un agent antistatique comprenant au moins un sel organique dans lequel le sel organique comprend un cation comprenant un substituant organique et un anion fluoro-organique,

dans lequel l'adhésif a une opacité inférieure à 1 %.